# EUROPÄISCHE PATENTSCHRIFT

(11) **EP 4 098 526 B1**
(45) Veröffentlichungstag und Bekanntmachung des Hinweises auf die Patenterteilung: **20.03.2024**
(21) Anmeldenummer: 22172250.7
(22) Anmeldetag: 09.05.2022
(51) Int. Cl.: B62H 5/14

(54) **RAHMENSCHLOSS**
FRAME LOCK
FERMETURE DE CADRE

(30) Priorität: 01.06.2021 DE 102021114205
(43) Veröffentlichungstag der Anmeldung: 07.12.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- DE-A1-102005 041 268
- DE-A1-102018 126 356
- DE-U1-202014 006 369
- DE-U1-202020 106 957

## Beschreibung

Die Erfindung betrifft ein Rahmenschloss für ein Zweirad.

Von mobilen Zweiradschlössern unterscheiden sich Rahmenschlösser typischerweise dadurch, dass sie fest und in der Regel dauerhaft mit dem Rahmen des Zweirads verbunden, beispielsweise an dem Rahmen angeschraubt, sind. Das Rahmenschloss wird dabei derart angeordnet, dass ein Bügel des Rahmenschlosses wahlweise in eine Stellung verstellt werden kann, in der er zwischen die Speichen eines Rades des Zweirads eingreift, um ein Fahren mit dem Zweirad auf diese Weise zu verhindern. In dieser Stellung wird der Bügel zweckmäßigerweise durch einen Riegel des Rahmenschlosses gesichert, der sich zumindest idealerweise ausschließlich über einen Schließzylinder oder eine sonstige Schließeinrichtung des Rahmenschlosses verstellen lässt, zu deren Betätigung ein Nutzer über ein Schließgeheimnis, wie etwa einen Schlüssel, verfügen muss. Typische Bauformen für den Bügel sind einerseits eine Ausbildung als Schwenkbügel mit geradem Verlauf und andererseits eine Ausbildung als Drehbügel mit kreisbogenförmigem Verlauf. Rahmenschlösser mit einem Drehbügel sind beispielsweise aus der gattungsgemäßen DE 20 2014 006 369 U1, sowie den Dokumenten DE 20 2020 106 957 U1, DE 10 2005 041 268 A1 und DE 10 2018 126 356 A1 bekannt.

Insbesondere kann ein Rahmenschloss einen Schlosskörper mit einem Riegel sowie einen Drehbügel umfassen, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist, wobei der Drehbügel eine Sperrstruktur mit einem Anschlagabschnitt aufweist, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Für die Zuverlässigkeit des Rahmenschlosses ist die Stabilität des Drehbügels ein entscheidender Faktor. Damit das Rahmenschloss möglichst nicht aufgebrochen werden kann, muss der Drehbügel besonders fest sein. Zugleich wird angestrebt, den Drehbügel möglichst kostengünstig und möglichst weitgehend automatisiert herstellen zu können. Der Drehbügel ist dabei vorzugsweise aus einem besonders harten und festen Material, beispielsweise aus einem gehärteten Metall, ausgebildet. Insbesondere kann der Drehbügel aus einem Stangenmaterial, wie etwa einem Metalldraht, hergestellt sein.

Um relativ zu dem Schlosskörper verstellbar zu sein, kann der Drehbügel zumindest teilweise in einem Gehäuse des Schlosskörpers, insbesondere in einer darin ausgebildeten Drehbügelaufnahme, aufgenommen und darin beweglich gelagert sein. Die Drehbügelaufnahme dient dabei zugleich der Führung des Drehbügels, so dass er zumindest im Wesentlichen ausschließlich entlang der Kreisbahn verstellt werden kann. Insbesondere aufgrund der an dem Drehbügel ausgebildeten Sperrstruktur kann der Drehbügel entlang seiner Längserstreckung Erhebungen und/oder Vertiefungen aufweisen, so dass er unter Umständen nicht oder nur in Teilbereichen seiner Längserstreckung flächig an einer Innenwand der Drehbügelaufnahme anliegen und daran geführt werden kann. Um ein Verkanten oder Verklemmen des Drehbügels in der Drehbügelaufnahme zu vermeiden, ist zudem in der Regel ein gewisses Spiel zwischen dem Außenumfang des Drehbügels und dem Innenumfang der Drehbügelaufnahme vorgesehen. Aus diesen Gründen kann der Drehbügel in der Drehbügelaufnahme oftmals kleinere Bewegungen quer zu seiner Längserstreckung ausführen und dabei gegen Ränder der Drehbügelaufnahme schlagen. Das kann insbesondere während einer Fahrt mit dem Zweirad, an dem das Rahmenschloss montiert ist, auftreten und dann zu wahrnehmbaren und störenden Klappergeräuschen führen.

Um den Drehbügel betätigen, also manuell zwischen seiner Offenstellung und seiner Geschlossenstellung verstellen, zu können, ist an dem Rahmenschloss typischerweise eine Handhabe vorgesehen, die an dem Drehbügel befestigt ist. Die Handhabe kann sich aus dem Rahmenschloss nach außen erstrecken, so dass sie gegriffen und um den Mittelpunkt der Kreisbahn bewegt werden kann, um den Drehbügel dadurch in entsprechender Weise entlang der Kreisbahn zu verstellen. Die Handhabe oder ein Befestigungsansatz, an dem die Handhabe befestigt werden kann, kann dabei für eine stabile Verbindung mit dem Drehbügel beispielsweise an dem Drehbügel angeschweißt sein. Alternativ dazu kann die Handhabe oder der Befestigungsansatz an den Drehbügel auch angeschraubt sein. Solche Arten der Befestigung an dem Drehbügel können jedoch zu einer Beeinträchtigung der Materialstruktur und somit der mechanischen Stabilität des Drehbügels führen.

Es ist eine Aufgabe der Erfindung, ein Rahmenschloss für ein Zweirad oder ein Rahmenschlosssystem mit einem Rahmenschloss bereitzustellen, das geräuscharm ist, dessen Drehbügel besonders stabil und dabei einfach betätigbar ist, das zudem flexibel einsetzbar und möglichst weitgehend automatisiert herstellbar ist.

Die Aufgabe wird gelöst durch ein Rahmenschloss mit den Merkmalen des Anspruchs 1 sowie durch ein Rahmenschlosssystem mit den Merkmalen des Anspruchs 15. Vorteilhafte Ausführungsformen ergeben sich aus den abhängigen Ansprüchen, der vorliegenden Beschreibung sowie den Figuren.

Das erfindungsgemäße Rahmenschloss für ein Zweirad umfasst einen Schlosskörper mit einem Riegel sowie eine Drehbügelanordnung, die einen Drehbügel sowie eine Leiste umfasst. Dabei erstreckt sich der Drehbügel längs einer Kreisbahn und ist relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar.

Der Drehbügel ist vorzugsweise aus Metall, wohingegen die Leiste vorzugsweise aus Kunststoff ist. Der Drehbügel ist vorzugsweise aus einem Stangenmaterial gebildet, insbesondere einem Metalldraht, wie etwa Stahldraht, wobei das Stangenmaterial bevorzugt einen konstanten, insbesondere kreisrunden, Querschnitt aufweist. Dieser Querschnitt kann ein Normalquerschnitt des Drehbügels sein, den der Drehbügel entlang eines Großteils seiner Längserstreckung und/oder zumindest entlang eines Blockierabschnitts aufweist, der in der Geschlossenstellung des Drehbügels außerhalb des Schlosskörpers, insbesondere außerhalb eines Gehäuses des Schlosskörpers, des Rahmenschlosses angeordnet ist, so dass der Drehbügel in seiner Geschlossenstellung mit dem Blockierabschnitt in das Rad des Zweirads eingreifen und es dadurch gegen Drehung sperren kann. Der Durchmesser der Kreisbahn kann z.B. im Bereich zwischen 10 cm und 15 cm liegen, beispielsweise etwa 13 cm betragen. Im Querschnitt kann der Drehbügel einen Durchmesser in der Größenordnung von einigen Millimetern bis wenigen Zentimetern aufweisen. Beispielsweise kann der Durchmesser des Querschnitts zumindest im Mittel etwa 8 oder 9 mm betragen. Durch die Erstreckung längs der Kreisbahn weist der Drehbügel eine Kreisbogenform auf, die sich über einen bestimmten Teilbereich der kreisförmig geschlossenen Kreisbahn erstreckt, beispielsweise über einen Winkelbereich von mindestens 200° und/oder höchstens 250°, vorzugsweise von mindestens 210° und/oder höchstens 240°, insbesondere von etwa 225° oder 230°.

Da der Drehbügel zwischen der Offenstellung und der Geschlossenstellung verstellbar ist, kann der Drehbügel aus der Offenstellung in eine Schließrichtung bis in die Geschlossenstellung und umgekehrt aus der Geschlossenstellung in eine zu der Schließrichtung entgegengesetzte Öffnungsrichtung bis in die Offenstellung verstellt werden. Dadurch wird jedoch nicht ausgeschlossen, dass der Drehbügel noch in anderer Weise, insbesondere in Schließrichtung über die Geschlossenstellung hinaus und/oder in Öffnungsrichtung über die Offenstellung hinaus, verstellbar sein kann.

Bei einem Verstellen des Drehbügels entlang der Kreisbahn wird der Drehbügel mit seiner kreisbogenförmigen Längserstreckung entlang der Kreisbahn verschoben, so dass er die Kreisbahn nicht verlässt, sondern sich nur über einen - hinsichtlich seiner Lage, jedoch nicht hinsichtlich seiner Winkelausdehnung - veränderten Teilbereich der Kreisbahn erstreckt. Das Verstellen des Drehbügels entspricht dabei einem Drehen des Drehbügels um eine Drehachse, die durch den Mittelpunkt der Kreisbahn verläuft und zu einer Ebene, in der die Kreisbahn liegt, senkrecht ausgerichtet ist.

Bei der Verstellbarkeit des Drehbügels entlang der Kreisbahn handelt es sich um eine grundsätzliche Verstellbarkeit, die sich insbesondere aus einer entsprechenden Lagerung des Drehbügels an dem Schlosskörper ergeben kann. Die Verstellbarkeit muss aber nicht permanent vorliegen, sondern kann durch den genannten Riegel blockiert sein, insbesondere um den Drehbügel mittels des Riegels in einer oder mehreren verschiedenen bestimmten Stellungen sichern zu können. Vorzugsweise ist der Drehbügel zumindest aus der Offenstellung bis in die Geschlossenstellung sowie aus der Geschlossenstellung bis in die Offenstellung verstellbar, wenn weder der Riegel noch irgendein Hindernis in der Bewegungsbahn (zum Beispiel eine Speiche des Rades des Zweirads) ein Verstellen blockieren.

Die Kreisbahn kann teilweise durch den Schlosskörper des Rahmenschlosses verlaufen, so dass sich der Drehbügel teilweise in oder durch den Schlosskörper erstrecken kann und dabei innerhalb des Schlosskörpers mit dem Riegel zusammenwirken kann. Vorzugsweise ist der Riegel dabei vollständig innerhalb eines Gehäuses des Schlosskörpers angeordnet, um von außen möglichst unzugänglich zu sein. Ferner kann der Drehbügel teilweise in dem Gehäuse des Schlosskörpers aufgenommen sein. Insbesondere kann der Drehbügel zumindest teilweise in einer in dem Schlosskörpers ausgebildeten Drehbügelaufnahme aufgenommen und darin beweglich, nämlich relativ zu dem Schlosskörper zwischen der Offenstellung und der Geschlossenstellung verstellbar, gelagert sein.

In der Geschlossenstellung erstreckt sich der Drehbügel vorzugsweise aus dem Schlosskörper, insbesondere aus dem genannten Gehäuse des Schlosskörpers, heraus und anschließend zumindest mit einem freien Ende wieder in den Schlosskörper, insbesondere in das Gehäuse, hinein, so dass der Schlosskörper und der Drehbügel in der Geschlossenstellung vorzugsweise einen geschlossenen Ring bilden. Auf diese Weise kann das jeweilige Rad besonders zuverlässig gegen Drehung gesperrt werden. In der Offenstellung erstreckt sich der Drehbügel dagegen aus dem Schlosskörper hinaus, jedoch nicht wieder in diesen hinein oder ist zumindest nahezu vollständig in dem Schlosskörper, insbesondere in dem Gehäuse, aufgenommen.

Selbstverständlich kann der Drehbügel in seiner Geschlossenstellung das Rad eines jeweiligen Zweirads nur dann gegen Drehung sperren, wenn das Rahmenschloss in geeigneter Weise an dem Zweirad montiert ist. Mit anderen Worten: Das Rahmenschloss ist dazu ausgebildet, derart an dem Zweirad angeordnet zu werden, dass der Drehbügel in seiner Geschlossenstellung ein Rad des Zweirads gegen Drehung sperrt (insbesondere indem er das Rad durchgreift) und in seiner Offenstellung das Rad für eine Drehung freigibt.

Erfindungsgemäß weist der Drehbügel eine Sperrstruktur mit einem Anschlagabschnitt auf, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Der Riegel kann insbesondere relativ zu dem genannten Gehäuse des Schlosskörpers zwischen der Entriegelungsstellung und der Verriegelungsstellung verstellbar sein. Bei dem Verstellen kann es sich beispielsweise um ein lineares Versetzen handeln. Vorzugsweise lässt sich der Riegel nur über eine an dem Schlosskörper, insbesondere in dem Schlosskörper, vorgesehene Schließeinrichtung, bevorzugt in Form eines Schließzylinders, verstellen, mit der er, z.B. über einen Mitnehmer, gekoppelt ist und die nur mittels eines ihr zugeordneten Schlüssels betätigbar ist.

Auch bei der Verstellbarkeit des Riegels handelt es sich um eine grundsätzliche Verstellbarkeit, die nicht permanent vorliegen muss, sondern insbesondere von der jeweiligen Stellung des Drehbügels abhängen kann. Vorzugsweise ist der Riegel jedenfalls dann aus der Entriegelungsstellung bis in die Verriegelungsstellung und umgekehrt aus der Verriegelungsstellung bis in die Entriegelungsstellung verstellbar, wenn sich der Drehbügel in seiner Geschlossenstellung befindet. Außerdem kann der Riegel insbesondere auch dann aus der Entriegelungsstellung bis in die Verriegelungsstellung und umgekehrt aus der Verriegelungsstellung bis in die Entriegelungsstellung verstellbar sein, wenn sich der Drehbügel in seiner Offenstellung befindet.

Somit kann der Drehbügel in seiner Geschlossenstellung durch den Riegel gesichert werden, indem der Riegel in seine Verriegelungsstellung verstellt wird und dann den Anschlagabschnitt der Sperrstruktur des Drehbügels hintergreift. Die Sperrung gegen ein Verstellen des Drehbügels entlang der Kreisbahn ist besonders zuverlässig, wenn der Anschlagabschnitt zumindest im Wesentlichen senkrecht zu der zu sperrenden Bewegungsrichtung, also zum Verlauf der Kreisbahn, des Drehbügels ausgerichtet ist, was daher bevorzugt ist.

Der Anschlagabschnitt ist vorzugsweise, jedoch nicht notwendigerweise, als Anschlagfläche, also flächig, ausgebildet. Grundsätzlich kann der Anschlagabschnitt auch durch eine Kante oder eine Kontur der Sperrstruktur gebildet werden.

Die Sperrstruktur kann auf viele verschiedene Weisen ausgebildet sein. Eine grundsätzlich denkbare Weise besteht darin, dass die Sperrstruktur einen Einschnitt oder eine Aussparung in dem Drehbügel umfasst, wobei sich der Einschnitt oder die Aussparung bezüglich des Mittelpunkts der Kreisbahn insbesondere radial von außen nach innen in den Drehbügel hinein erstrecken kann. Der Anschlagabschnitt kann dabei als eine Seitenwand eines solchen Einschnitts oder einer solchen Aussparung ausgebildet sein. Der Anschlagabschnitt kann aber auch durch eine Seitenwand einer von dem Drehbügel vorstehenden Struktur gebildet werden.

Die Sperrstruktur kann mehrere Anschlagabschnitte aufweisen, die jeweils von dem Riegel hintergriffen werden können, um verschiedene Stellungen des Drehbügels gegen ein Verlassen der jeweiligen Stellung in zumindest eine Verstellrichtung zu sichern. Dabei können mehrere der Anschlagabschnitte dem Sichern derselben Stellung dienen, sei es bezüglich derselben Verstellrichtung oder zueinander entgegengesetzter Verstellrichtungen.

Das genannte Hintergreifen des Anschlagabschnitts durch den Riegel ist auf das zu sperrende Verstellen des Drehbügels bezogen zu verstehen. Insbesondere greift der Riegel dabei quer zum Verlauf der Kreisbahn in eine Bewegungsbahn des Anschlagabschnitts ein, die der Anschlagabschnitt durchlaufen würde, wenn sich der Riegel in seiner Entriegelungsstellung befände und der Drehbügel in die zu sperrende Verstellrichtung entlang der Kreisbahn verstellt würde.

Wenn sich der Drehbügel in seiner Geschlossenstellung befindet und sich der Riegel in seiner Verriegelungsstellung befindet, liegt der Riegel vorzugsweise an dem Anschlagabschnitt an oder weist zumindest einen nur geringen Abstand, beispielsweise von weniger als 1 mm, insbesondere von wenigen hundert Mikrometern, von dem Anschlagabschnitt auf. Dadurch wird der Drehbügel vorteilhafterweise dagegen gesperrt, die Geschlossenstellung überhaupt in Richtung der Offenstellung zu verlassen. Grundsätzlich kann der Riegel aber auch einen größeren Abstand von dem Anschlagabschnitt aufweisen, so dass der Drehbügel zwar um eine diesem Abstand entsprechende Strecke aus der Geschlossenstellung verstellt werden kann, aber jedenfalls dagegen gesperrt wird, eine Stellung zu erreichen, in welcher der Drehbügel das Rad nicht länger zuverlässig gegen eine Drehung sperren würde.

Neben dem Drehbügel umfasst die Drehbügelanordnung die genannte Leiste. Diese Leiste ist erfindungsgemäß an dem Drehbügel angeordnet, erstreckt sich längs der Kreisbahn und ist derart ausgebildet, dass sie den Drehbügel entlang eines Teils seiner Längserstreckung, d. h. seiner Erstreckung entlang der Kreisbahn, und eines Teils seines Umfangs überdeckt.

Die Leiste ist dabei insbesondere derart an dem Drehbügel angeordnet, dass sie bei einem Verstellen des Drehbügels zusammen mit dem Drehbügel verstellt wird. Die durch den Drehbügel und die Leiste gebildete Drehbügelanordnung bildet insofern eine funktionale Einheit des Rahmenschlosses. Vorzugsweise sind der Drehbügel und die Leiste, jedenfalls nachdem die Leiste bei der Montage des Rahmenschlosses an dem Drehbügel angeordnet wurde, nur gemeinsam bewegbar, also ohne Relativbewegung zueinander.

Jeweilige Stellungen des Drehbügels stellen daher zugleich auch entsprechende Stellungen der Leiste sowie der gesamten Drehbügelanordnung dar. Insbesondere befinden sich in der Offenstellung des Drehbügels auch die Leiste sowie die Drehbügelanordnung als Ganzes in einer Offenstellung und in der Geschlossenstellung des Drehbügels auch die Leiste sowie die Drehbügelanordnung als Ganzes in einer Geschlossenstellung und sind zwischen diesen Stellungen verstellbar.

Da die Leiste den Drehbügel entlang zumindest eines Teils seiner Längserstreckung überdeckt, erstreckt sich die Leiste in entsprechender Weise wie der Drehbügel längs der genannten Kreisbahn. Insbesondere kann die Leiste somit einen zumindest im Wesentlichen kreisbogenförmigen Verlauf aufweisen, entlang dessen sie zumindest abschnittsweise einen konstanten Querschnitt aufweisen kann.

Längs der Kreisbahn kann sich die Leiste beispielsweise über mindestens 120° und/oder höchstens 150°, insbesondere über etwa 135°, erstrecken. Die Längserstreckung der Leiste, d. h. ihre Erstreckung längs der Kreisbahn, kann insbesondere auf einen Lagerungsabschnitt beschränkt sein, der sowohl in der Geschlossenstellung des Drehbügels als auch in der Offenstellung des Drehbügels (und auch in allen Stellungen dazwischen) innerhalb des Schlosskörpers, insbesondere innerhalb eines Gehäuses des Schlosskörpers, angeordnet ist. Vorzugsweise erstreckt sich die Leiste dabei in die genannte Öffnungsrichtung bis zu dem entsprechenden Ende des Drehbügels. In die entgegengesetzte Schließrichtung erstreckt sich die Leiste vorzugsweise über zumindest einen Großteil des Lagerungsabschnitts. Insbesondere kann sich die Leiste zumindest im Wesentlichen über den gesamten Lagerungsabschnitt erstrecken.

Die Leiste erstreckt sich dabei nicht nur längs der Kreisbahn, sondern auch in Umfangsrichtung um den Verlauf der Kreisbahn herum und überdeckt so zumindest einen Teil des Umfangs des Drehbügels, wobei dieser Umfang auf den jeweiligen Querschnitt des Drehbügels in einer Orthogonalebene zum Verlauf der Kreisbahn bezogen ist. Auf diese Weise kann die Leiste den Drehbügel, insbesondere je nach der Position entlang der Längserstreckung mehr oder weniger weit, umgreifen. Das kann zu einer besonders stabilen Anordnung der Leiste an dem Drehbügel beitragen.

Zur Überdeckung des Drehbügels kann die Leiste in den Bereichen, in denen sie den Drehbügel überdeckt, an dem Drehbügel, insbesondere flächig, anliegen. Durch das Überdecken kann die Leiste einen Schutz für den Drehbügel darstellen, beispielsweise vor mechanischer Beeinträchtigung, vor Schmutz und/oder Feuchtigkeit. Zudem können durch die Leiste Freiräume zwischen dem Drehbügel und einer oder mehreren Innenwänden der Drehbügelaufnahme des Schlosskörpers, in welcher die Drehbügelanordnung zumindest teilweise aufgenommen und beweglich gelagert sein kann, ausgefüllt werden, so dass der Drehbügel über die Leiste innerhalb der Drehbügelaufnahme weitgehend spielfrei geführt ist und Klappergeräusche dadurch vermieden werden können. Hierzu kann auch die Ausbildung der Leiste aus Kunststoff beitragen, der, insbesondere hinsichtlich seiner Elastizität und/oder Oberflächenbeschaffenheit so gewählt bzw. ausgebildet sein kann, dass die Leiste gut an einer jeweiligen Innenwand der Drehbügelaufnahme entlanggleiten kann. Die Leiste kann zudem der Verbindung des Drehbügels mit einer Handhabe dienen, wie weiter unten noch erläutert wird.

Aufgrund dieser verschiedenen Funktionen kann die Leiste insbesondere auch als "Abdeckung", "Schiene", insbesondere "Führungsschiene", oder "Verbinder" bezeichnet werden.

Erfindungsgemäß ist ferner vorgesehen, dass sich die Leiste über mehr als 180°, vorzugsweise über mindestens 210°, insbesondere über etwa 225°, in Umfangsrichtung um den Drehbügel erstreckt.

Der genannte Winkelbereich ist in Bezug auf einen Mittelpunkt eines Querschnitts des Drehbügels definiert, der vorzugsweise dem Flächenschwerpunkt dieses Querschnitts entspricht. Bei dem Querschnitt kann es sich insbesondere um den Querschnitt des Drehbügels an der jeweiligen Position entlang der Längserstreckung des Drehbügels oder um den genannten Normalquerschnitt des Drehbügels handeln, der gegebenenfalls bis an die jeweilige Position entlang der Kreisbahn gedanklich fortgesetzt werden muss. Der Querschnitt kann insbesondere kreisrund sein.

Die genannte Erstreckung in Umfangsrichtung weist die Leiste zumindest insgesamt auf, d.h. sie muss sich nicht unbedingt an einer einzelnen Position entlang ihrer Längserstreckung über den genannten Winkelbereich in Umfangsrichtung um den Drehbügel erstrecken, sondern kann sich an einer Position am weitesten in die eine Umfangsrichtung und an einer anderen Position am weitesten in die entgegengesetzte Umfangsrichtung erstrecken, wobei diese Erstreckungen einen Winkel zwischen sich einschließen, der mehr als 180°, vorzugsweise mindestens 210°, insbesondere etwa 225°, beträgt.

Vorzugweise jedoch erstreckt sich die Leiste in einem oder in mehreren Teilbereichen ihrer Längserstreckung entlang des gesamten jeweiligen Teilbereichs über mehr als 180°, vorzugsweise über mindestens 210°, insbesondere über etwa 225°, in Umfangsrichtung um den Drehbügel. Mit anderen Worten gilt für jede Position entlang der Längserstreckung der Leiste, die innerhalb eines jeweiligen dieser Teilbereiche liegt, dass sich die Leiste an dieser Position über den genannten Winkelbereich in Umfangsrichtung um den Drehbügel erstreckt.

Vorzugsweise weisen die genannten Teilbereiche, in denen sich die Leiste über mehr als 180°, vorzugsweise über mindestens 210°, insbesondere über etwa 225°, in Umfangsrichtung um den Drehbügel erstreckt, zusammen eine Länge (d.h. Erstreckung entlang der Kreisbahn) auf, die größer als die Hälfte der Längserstreckung der Leiste ist. Insbesondere ist es bevorzugt, wenn sich der längste dieser Teilbereiche über mehr als die Hälfte der Längserstreckung der Leiste erstreckt.

Grundsätzlich kann die Überdeckung des Drehbügels durch die Leiste in Umfangsrichtung Unterbrechungen aufweisen, also sich auf mehrere separate Abschnitte verteilen, die sich gemeinsam über mehr als 180°, vorzugsweise über mindestens 210°, insbesondere über etwa 225°, des Umfangs des Drehbügels erstrecken. Vorzugsweise wird der Drehbügel jedoch von einem in Umfangsrichtung durchgehenden, also unterbrechungsfreien, Abschnitt der Leiste über den genannten Winkelbereich hinweg überdeckt.

Dadurch, dass sich die Leiste im Umfangsrichtung um den Drehbügel über mehr als 180° erstreckt und den Drehbügel somit über mehr als die Hälfte seines Umfangs überdeckt, wird der Drehbügel von mindestens drei Seiten umgriffen. Mit anderen Worten überdeckt die Leiste den Drehbügel somit zumindest bezüglich dreier Richtungen, von denen zwei entgegengesetzt zueinander ausgerichtet sind und die dritte senkrecht dazu ausgerichtet ist, wobei die Richtungen quer zur Längserstreckung der Leiste bzw. des Drehbügels ausgerichtet sind und insbesondere radial zu dem genannten Mittelpunkt des Querschnitts des Drehbügels ausgerichtet sein können. Durch ein solches Umgreifen kann die Leiste besonders zuverlässig an dem Drehbügel angeordnet sein. Zudem kann die Leiste den Drehbügel auf diese Weise über einen Großteil seines Umfangs gegenüber der genannten Drehbügelaufnahme abstützen, so dass der Drehbügel besonders zuverlässig in der Drehbügelaufnahme geführt wird.

Gemäß einer vorteilhaften Ausführungsform überdeckt die Leiste den Drehbügel zumindest bereichsweise in zur Ebene der Kreisbahn senkrechter Richtung, zumindest bereichsweise in dazu entgegengesetzter Richtung sowie zumindest bereichsweise in zum Mittelpunkt der Kreisbahn oder davon weg weisender Richtung. Die Bereiche, in denen die Leiste den Drehbügel in eine der genannten Richtungen überdeckt, können entlang der Kreisbahn überlappen. Vorzugsweise überdeckt die Schiene den Drehbügel in einem oder mehreren Teilbereichen, insbesondere in den vorstehend genannten Teilbereichen, ihrer Längserstreckung in alle drei Richtungen. Unter einem Überdecken in eine bestimmte Richtung ist dabei zu verstehen, dass die Leiste in dieser Richtung an den Drehbügel angrenzend angeordnet ist, so dass sie ihn aus dieser Richtung betrachtet verdeckt. Dabei ist es bevorzugt, wenn die Leiste entlang ihrer Längserstreckung zumindest dort, wo sie den Drehbügel überdeckt, insbesondere flächig, an dem Drehbügel anliegt.

In Teilbereichen ihrer Längserstreckung, in denen die Leiste den Drehbügel sowohl in zur Ebene der Kreisbahn senkrechter Richtung als auch in dazu entgegengesetzter Richtung als auch im zum Mittelpunkt der Kreisbahn oder davon weg weisender Richtung überdeckt, kann die Überdeckung spiegelsymmetrisch bezüglich einer Ebene der Kreisbahn sein. Insbesondere kann die Leiste in diesen Teilbereichen oder auch entlang ihrer gesamten Längserstreckung, gegebenenfalls mit Ausnahme zumindest eines Endabschnitts ihrer Längserstreckung, bezüglich dieser Ebene spiegelsymmetrisch ausgebildet sein.

Ferner kann die Leiste in diesen Teilbereichen oder auch entlang ihrer gesamten Längserstreckung, gegebenenfalls mit Ausnahme zumindest eines Endabschnitts ihrer Längserstreckung, einen, vorzugsweise zumindest im Wesentlichen konstanten, U- oder C-förmigen Querschnitt (senkrecht zum Verlauf der Kreisbahn) aufweisen. Dabei ist die offene Seite der U- bzw. C-Form bezüglich des Mittelpunkts der Kreisbahn vorzugsweise in eine radiale Richtung, insbesondere radial nach außen, weisend ausgerichtet.

Gemäß einer vorteilhaften Ausführungsform ist die Leiste als ein von dem Drehbügel separates, formstabiles und/oder elastisches Teil ausgebildet. Hierzu eignet sich als Material der Leiste insbesondere ein Kunststoff, wobei der Kunststoff beispielsweise durch Spritzgießen in die Form der Leiste gebracht werden kann.

Gemäß einer weiteren vorteilhaften Ausführungsform ist die Leiste formschlüssig, an dem Drehbügel befestigt. Der Formschluss liegt dabei insbesondere in sämtliche Raumrichtungen vor, so dass es keine Richtung gibt, in welche die Leiste relativ zu dem Drehbügel bewegt werden kann, jedenfalls nicht, ohne dass die Leiste dazu verformt werden muss. Die formschlüssige Befestigung kann insgesamt über mindestens 80 % der Längserstreckung der Leiste vorgesehen sein. Dabei muss sich die formschlüssige Befestigung nicht unbedingt ausschließlich über einen einzelnen durchgehenden Teilbereich der Längserstreckung erstrecken, sondern sie kann auch auf mehrere separate Teilbereiche verteilt sein.

Vorzugsweise ist die Leiste einrastend, also durch einen elastisch reversiblen Formschluss, an dem Drehbügel befestigt. Beispielweise kann die Leiste nach Art einer Schnappverbindung mit dem Drehbügel verbunden sein. Dabei ist es zum Befestigen der Leiste an dem Drehbügel erforderlich, die Leiste, die eine entsprechende Elastizität aufweist, zumindest geringfügig elastisch zu verformen, insbesondere aufzuweiten, um sie an dem Drehbügel anzuordnen, woraufhin die Elastizität die Verformung wieder zumindest weitgehend rückgängig macht, so dass die Leiste den Drehbügel dann formschlüssig umgreift, nämlich über mehr als die Hälfte seines Umfangs. Insbesondere kann das vorübergehende Aufweiten und das anschließende Umgreifen entlang der Längserstreckung der Leiste überall dort erfolgen, wo sich die Leiste in Umfangsrichtung über mehr als die Hälfte des Umfangs des Drehbügels erstreckt.

Die Leiste kann zusätzlich zu dem genannten Formschluss zumindest bereichsweise auch kraftschlüssig an dem Drehbügel anliegen. Dabei können Abschnitte der Leiste, insbesondere aufgrund der genannten Elastizität der Leiste, gegen den Drehbügel vorgespannt sein. Durch einen zusätzlichen Kraftschluss wird die Befestigung der Leiste an dem Drehbügel noch verbessert.

Die Vorteile einer formschlüssigen, insbesondere einrastenden, Befestigung der Leiste an dem Drehbügel ergeben sich auch unabhängig davon, über welchen Winkelbereich sich die Leiste in Umfangsrichtung um den Drehbügel erstreckt. Insbesondere trägt der Formschluss dazu bei, dass die Leiste zuverlässig an dem Drehbügel angeordnet ist, so dass der Drehbügel über die Leiste in der Drehbügelaufnahme abgestützt und besonders störungsarm gleitend geführt sein kann. Insofern bezieht sich die Erfindung auch unabhängig vom Maß der Erstreckung der Leiste in Umfangsrichtung um den Drehbügel auf ein Rahmenschloss für ein Zweirad mit einem Schlosskörper, der einen Riegel umfasst, sowie mit einer Drehbügelanordnung, die einen Drehbügel, vorzugweise aus Metall, sowie eine Leiste, vorzugsweise aus Kunststoff, umfasst, wobei sich der Drehbügel längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist, wobei der Drehbügel eine Sperrstruktur mit einem Anschlagabschnitt aufweist, wobei der Riegel zwischen einer Entriegelungsstellung und einer Verriegelungsstellung verstellbar ist, wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt, wobei die Leiste an dem Drehbügel angeordnet ist, sich längs der Kreisbahn erstreckt und derart ausgebildet ist, dass sie den Drehbügel entlang zumindest eines Teils seiner Längserstreckung und zumindest eines Teils seines Umfangs überdeckt, und wobei die Leiste formschlüssig, insbesondere einrastend, an dem Drehbügel befestigt ist. Sowohl die vorstehenden als auch die nachfolgenden Erläuterungen zu dem oben genannten Rahmenschloss, insbesondere zu dessen Drehbügelanordnung, sowie die Beschreibungen verschiedener Möglichkeiten der Ausführung des Rahmenschlosses gelten, soweit anwendbar, auch für das vorliegende Rahmenschloss. Insbesondere ergeben sich aus den Merkmalen der abhängigen Ansprüche nicht nur Ausführungsformen des oben genannten Rahmenschlosses, sondern auch vorteilhafte Ausführungsformen des vorliegenden Rahmenschlosses.

Gemäß einer vorteilhaften Ausführungsform des erfindungsgemäßen Rahmenschlosses bilden ein Endabschnitt des Drehbügels und ein korrespondierender Endabschnitt der Leiste eine Schwenkverbindung, die einen Zapfen aufweist, der sich entlang einer zur Ebene der Kreisbahn senkrechten Längsachse erstreckt, wobei die Leiste um die Längsachse des Zapfens relativ zu dem Drehbügel schwenkbar ist. Der Endabschnitt des Drehbügels umfasst eines der beiden Enden der Längserstreckung des Drehbügels und erstreckt sich von diesem Ende aus entlang der Kreisbahn über eine bestimmte Strecke. Der korrespondierende Endabschnitt der Leiste umfasst eines der beiden Enden der Längserstreckung der Leiste, nämlich dasjenige, das hinsichtlich seiner Ausrichtung entlang der Kreisbahn dem genannten Ende des Drehbügels entspricht, und erstreckt sich von diesem Ende aus entlang der Kreisbahn über eine bestimmte Strecke. Die Strecken, über die sich der Endabschnitt des Drehbügels und der korrespondierende Endabschnitt der Leiste erstrecken, können jeweils eine Länge von einigen Millimetern, beispielsweise eine Länge von höchstens 15 mm, vorzugsweise von höchstens 10 mm, aufweisen und/oder eine Länge von höchstens 10 %, vorzugsweise höchstens 5 %, der Längserstreckung des Drehbügels aufweisen. Vorzugsweise ist diese Strecke für den Endabschnitt des Drehbügels und den korrespondierenden Endabschnitt der Leiste gleich lang.

Bei der Längsachse, entlang welcher sich der Zapfen erstreckt, kann es sich insbesondere um eine Symmetrieachse des Zapfens handeln. Der Zapfen kann zumindest im Wesentlichen eine Zylinderform aufweisen, wobei die Längsachse dann die Zylinderachse der Zylinderform ist. Der Querschnitt des Zapfens senkrecht zur Längsachse ist zumindest bereichsweise, vorzugsweise über die gesamte Länge (d. h. Erstreckung entlang der Längsachse) des Zapfens - gegebenenfalls mit Ausnahme eines freien Endes des Zapfens, das insbesondere eine Abfasung aufweisen kann - konstant.

Die Längsachse des Zapfens ist vorzugsweise senkrecht zur Ebene der Kreisbahn ausgerichtet, entlang welcher sich der Drehbügel erstreckt. Bei einem Schwenken der Leiste um die Längsachse des Zapfens relativ zu dem Drehbügel kann die Leiste daher bezüglich des Mittelpunkts der Kreisbahn in zumindest annähernd radialer Richtung gegen den Drehbügel geschwenkt werden, um daran angeordnet, insbesondere formschlüssig befestigt, zu werden. Insbesondere kann die Leiste dazu ausgebildet sein, von einem Innenraum der Kreisbahn aus an eine Innenseite, d. h. an eine bezüglich des Mittelpunkts der Kreisbahn nach radial innen (zum Mittelpunkt) weisende Seite, der Kreisbogenform des Drehbügels heran geschwenkt zu werden, um an dem Drehbügel angeordnet, insbesondere formschlüssig befestigt, zu werden.

Gemäß einer vorteilhaften Ausführungsform ist der Formschluss zwischen der Leiste und dem Drehbügel durch Schwenken der Leiste um die Längsachse des Zapfens auf den Drehbügel zu herbeiführbar. Die Schwenkbewegung kann dabei ein Einrasten, insbesondere das weiter oben beschriebene Einrasten, der Leiste an dem Drehbügel umfassen. Durch eine solche Ausbildung kann der vorteilhafte Formschluss zwischen der Leiste und dem Drehbügel auf klar definierte Weise herbeigeführt werden.

Umgekehrt kann außerdem vorgesehen sein, dass der Formschluss zwischen der Leiste und dem Drehbügel durch Schwenken der Leiste um die Längsachse des Zapfens von dem Drehbügel weg wieder lösbar ist. Dies kann zweckmäßig sein, um die Leiste auf einfache Weise austauschen zu können.

Gemäß einer weiteren vorteilhaften Ausführungsform ist in dem Endabschnitt des Drehbügels ein Loch ausgebildet, wobei der Zapfen an dem korrespondierenden Endabschnitt der Leiste ausgebildet ist und in das Loch, vorzugsweise senkrecht zur Ebene der Kreisbahn, eingreift, insbesondere das Loch durchgreift. Eine solche Ausbildung stellt eine besonders einfache Art einer Schwenkverbindung dar, deren Elemente sich leicht, insbesondere auch automatisiert, herstellen und miteinander verbinden lassen. Der Zapfen ist vorzugsweise an dem korrespondierenden Endabschnitt der Leiste integral ausgebildet und/oder stoffschlüssig mit der Leiste verbunden. Grundsätzlich kann der Zapfen aber auch als separates Element ausgebildet und fest mit der Leiste verbunden sein.

Alternativ zu dieser Ausführungsform kann auch vorgesehen sein, dass gerade umgekehrt der Zapfen an dem Endabschnitt des Drehbügels ausgebildet ist, insbesondere integral daran ausgebildet und/oder stoffschlüssig damit verbunden, und, vorzugsweise senkrecht zur Ebene der Kreisbahn, in ein Loch eingreift, insbesondere ein Loch durchgreift, wobei das Loch in dem korrespondierenden Endabschnitt der Leiste ausgebildet ist.

Gemäß einer vorteilhaften Ausführungsform umfasst das Rahmenschloss ferner eine Feder zum Vorspannen des Drehbügels relativ zu dem Schlosskörper, wobei die Feder an dem genannten Zapfen befestigt ist. Bei der Feder handelt es sich vorzugsweise um eine Schraubenfeder, insbesondere um eine Schraubenzugfeder. Durch die Feder kann der Drehbügel insbesondere in Öffnungsrichtung vorgespannt sein.

Zur Befestigung an dem Zapfen kann die Feder eine an einem Ende der Feder ausgebildete Öse aufweisen und dann mit dieser Öse den Zapfen umschließen. Insbesondere kann der Zapfen zunächst die Öse der Feder durchgreifen und dann das genannte Loch durchgreifen oder zumindest darin eingreifen. Die Öse ist dabei vorteilhafter Weise zwischen dem Drehbügel und der Leiste gefangen, so dass die Kopplung des Drehbügels mit der Feder in gewisser Weise von der Leiste gesichert wird. Die Öse muss nicht unbedingt umfänglich geschlossen sein, sondern es kann reichen, wenn die Öse den Zapfen wie ein Rundhaken zumindest über einen überwiegenden Teil seines Umfangs umgreift.

Der Drehbügel kann über die Feder, insbesondere ausschließlich über die Feder, mit dem Schlosskörper, insbesondere einem Gehäuse des Schlosskörpers, permanent fest verbunden sein. Dazu kann die Feder an ihrem der genannten Öse entgegengesetzten Ende eine weitere Öse aufweisen oder auf sonstige Weise zur Kopplung mit dem Schlosskörper ausgebildet sein. In seiner Geschlossenstellung und/oder seiner Offenstellung kann der Drehbügel zusätzlich über den Riegel, wenn dieser einen jeweiligen am Drehbügel ausgebildeten Anschlagabschnitt hintergreift, gegen ein Lösen von dem Schlosskörper gesichert sein.

An seinem Endabschnitt ist der Drehbügel somit nicht nur schwenkbar mit der Leiste verbunden, sondern auch mit dem Schlosskörper gekoppelt. Vorteilhafterweise ist dazu keine zusätzliche Struktur erforderlich, sondern kann dieselbe Struktur (Zapfen und Loch) sowohl der Ausbildung einer Schwenkverbindung als auch der Kopplung mit dem Schlosskörper dienen.

Gemäß einer weiteren vorteilhaften Ausführungsform weist die Leiste eine Handhabe zum manuellen Verstellen des Drehbügels oder einen Befestigungsansatz zur Befestigung einer solchen Handhabe an der Leiste auf. Die Handhabe bzw. der Befestigungsansatz kann an der Leiste befestigt oder integral, insbesondere stoffschlüssig, an der Leiste ausgebildet, beispielsweise angeformt, sein. Vorzugsweise steht die Handhabe oder der Befestigungsansatz entweder bezüglich des Mittelpunkts der Kreisbahn radial nach außen oder senkrecht zur Ebene der Kreisbahn von der Leiste vor und kann sich in diese Richtung, beispielsweise durch einen Schlitz im Gehäuse des Schlosskörpers, aus der Drehbügelaufnahme heraus erstrecken. Auf diese Weise kann die Handhabe sowohl in der Offenstellung als auch in der Geschlossenstellung der Drehbügelanordnung eine Position einnehmen, in der sie gut gegriffen und betätigt werden kann.

Gemäß einer weiteren vorteilhaften Ausführungsform weist der Drehbügel entlang seiner Längserstreckung wenigstens eine Erhebung auf, die in eine Ausnehmung der Leiste eingreift, so dass (durch dieses Eingreifen) bezüglich des Verlaufs der Kreisbahn ein Formschluss zwischen der Leiste und dem Drehbügel gebildet ist. Alternativ oder zusätzlich dazu kann vorgesehen sein, dass der Drehbügel entlang seiner Längserstreckung wenigstens eine Ausnehmung aufweist, in die eine Erhebung der Leiste eingreift, so dass (durch dieses Eingreifen) bezüglich des Verlaufs der Kreisbahn ein Formschluss zwischen der Leiste und dem Drehbügel gebildet ist.

Bei der Ausnehmung kann es sich beispielsweise um eine Öffnung oder eine Aussparung in der Leiste bzw. in dem Drehbügel handeln. Insbesondere kann die genannte Ausnehmung der Leiste als eine Vertiefung in der Leiste ausgebildet sein, die sich von dem Drehbügel weg, also bezüglich eines Mittelpunkts des Querschnitts des Drehbügels radial nach außen, in die Leiste erstreckt. Die genannte Ausnehmung des Drehbügels kann insbesondere als eine Vertiefung in dem Drehbügel ausgebildet sein, die sich in den Drehbügel hinein, also bezüglich eines Mittelpunkts des Querschnitts des Drehbügels radial nach innen, erstreckt.

Die an dem Drehbügel gegebenenfalls vorgesehenen Erhebungen und/oder Ausnehmungen können Teil der genannten Sperrstruktur des Drehbügels sein. Je nach Form, Anordnung und/oder Ausrichtung einer jeweiligen Erhebung bzw. Ausnehmung kann sich die Wirkung eines durch sie herbeigeführten Formschlusses auf eine der beiden möglichen Richtungen entlang der Kreisbahn beschränken.

Der Formschluss entlang der Kreisbahn kann sich dabei jeweils gerade durch das genannte Eingreifen einer jeweiligen Erhebung des einen Teils (Drehbügel bzw. Leiste) in eine jeweilige Ausnehmung des anderen Teils ergeben. Mit anderen Worten wird durch das Zusammenwirken der gegebenenfalls mehreren Erhebungen und Ausnehmungen die Leiste formschlüssig dagegen gesichert, relativ zum Drehbügel entlang der Kreisbahn verschoben zu werden. Das führt zu einer zusätzlichen Stabilisierung der Anordnung von Drehbügel und Leiste entlang der Längserstreckung durch formschlüssiges Ineinandergreifen. Eine solche (gegebenenfalls zusätzliche) Sicherung und Stabilisierung der Drehbügelanordnung kann insbesondere deshalb zweckmäßig sein, weil auf die Leiste, die an den Innenseiten der Drehbügelaufnahme entlanggleitet, bei einem Verstellen der Drehbügelanordnung Reibungskräfte wirken, welche die Leiste ansonsten aus ihrer korrekten Anordnung an dem Drehbügel drängen könnten.

Gemäß einer weiteren vorteilhaften Ausführungsform umfasst die Sperrstruktur zumindest zwei Anschlagabschnitte, die der Geschlossenstellung und der Offenstellung des Drehbügels entsprechen, wobei der Riegel, wenn sich der Drehbügel in seiner Geschlossenstellung oder seiner Offenstellung befindet und sich der Riegel in seiner Verriegelungsstellung befindet, den entsprechenden Anschlagabschnitt hintergreift und den Drehbügel dadurch gegen ein Verstellen aus der jeweiligen Stellung sperrt. Der eine der zwei Anschlagabschnitte entspricht dabei insofern der Geschlossenstellung, als er, wenn sich der Drehbügel in seiner Geschlossenstellung befindet und sich der Riegel in seiner Verriegelungsstellung findet, von dem Riegel bezüglich des Verlaufs der Kreisbahn derart hintergriffen wird, dass er in Öffnungsrichtung nicht an dem Riegel vorbeigeführt werden kann und der Drehbügel somit gegen ein Verstellen aus der Geschlossenstellung in Richtung der Offenstellung gesperrt ist. Der andere der zwei Anschlagabschnitte entspricht dabei insofern der Offenstellung, als er, wenn sich der Drehbügel in seiner Offenstellung befindet und sich der Riegel in seiner Verriegelungsstellung befindet, von dem Riegel bezüglich des Verlaufs der Kreisbahn derart hintergriffen wird, dass er in Schließrichtung nicht an dem Riegel vorbeigeführt werden kann und der Drehbügel somit gegen ein Verstellen aus der Offenstellung in Richtung der Geschlossenstellung gesperrt ist.

Bei dieser Ausführungsform erstreckt sich die Leiste entlang der Kreisbahn vorzugsweise zumindest zwischen den zwei Anschlagabschnitten, d. h. zumindest von dem einen der zwei Anschlagabschnitte bis zu dem anderen. Die Leiste kann sich dabei entlang der Kreisbahn auch über einen der beiden Anschlagabschnitte oder über beide hinaus erstrecken, zumindest aber überdeckt sie den Drehbügel entlang desjenigen Teils seiner Längserstreckung, den die beiden Anschlagabschnitte zwischen sich einschließen.

Gemäß einer vorteilhaften Weiterbildung dieser Ausführungsform umfasst die Sperrstruktur zumindest zwei von dem Drehbügel, vorzugsweise in dieselbe Richtung, vorstehende Stege, wobei jeder der zwei Stege einen der zwei Anschlagabschnitte aufweist, also der eine Steg den einen Anschlagabschnitt und der andere Steg den anderen aufweist. Die Anschlagabschnitte sind dabei vorzugsweise unmittelbar an dem jeweiligen Steg, insbesondere als Stirnseite des jeweiligen Stegs, ausgebildet.

Die Richtung, in welche die Stege vorstehen, ist vorzugsweise senkrecht zur Längserstreckung des Drehbügels, also zum Verlauf der genannten Kreisbahn. Da die beiden Stege vorzugsweise in dieselbe Richtung von dem Drehbügel vorstehen, können sie insbesondere parallel zueinander von dem Drehbügel vorstehen. Sie können aber auch insofern in dieselbe Richtung von dem Drehbügel vorstehen, als sie beide bezüglich des Mittelpunkts der Kreisbahn in dieselbe radiale Richtung von dem Drehbügel vorstehen. Die zwei Stege können beispielsweise bezüglich des Mittelpunkts der Kreisbahn beide radial nach innen oder beide radial nach außen vorstehen. Vorzugsweise stehen die zwei Stege beide in dieselbe axiale, d.h. zur Ebene der Kreisbahn senkrechte, Richtung von dem Drehbügel vor.

Es muss dabei nicht der gesamte jeweilige Steg von dem Drehbügel vorstehen, sondern es genügt, wenn der Steg teilweise von dem Drehbügel vorsteht. Ein Teil des Stegs kann sich auch, insbesondere quer zur Längserstreckung des Drehbügels, in den Drehbügel hinein erstrecken. Der von dem Drehbügel vorstehende Teil des Stegs kann insbesondere eine relativ zu seiner Umgebung konvexe Struktur darstellen.

Der Steg kann beispielsweise relativ zu dem Querschnitt eines angrenzenden Abschnitts des Drehbügels vorstehen, insbesondere relativ zu dem Querschnitt eines Stangenmaterials, aus dem der Drehbügel gebildet ist, bevor daran die Sperrstruktur oder zumindest der Steg ausgebildet wurde. Dass der Steg über einen Querschnitt vorsteht, meint dabei insbesondere, dass sich der Steg - entlang der Erstreckung des Drehbügels längs der Kreisbahn betrachtet - über eine Außenkontur des Querschnitts hinaus erstreckt.

Die Stege stellen somit einen Teil der Sperrstruktur dar, mit welcher der Riegel zusammenwirkt, um den Drehbügel gegen ein Verstellen aus einer jeweiligen Stellung zu sperren. Hierzu sind die Stege vorteilhafterweise an entsprechenden Positionen an dem Drehbügel ausgebildet. Mit anderen Worten sind die Stege dazu ausgebildet (insbesondere derart angeordnet), dass der Riegel den Anschlagabschnitt eines jeweiligen der zwei Stege hintergreift, wenn sich der Drehbügel in seiner Geschlossenstellung bzw. in seiner Offenstellung befindet und sich der Riegel in seiner Verriegelungsstellung befindet.

Die Stege, insbesondere die gesamte Sperrstruktur, sind vorzugsweise innerhalb des genannten Lagerungsabschnitts des Drehbügels, also desjenigen Abschnitts der Längserstreckung des Drehbügels, der bei einem Verstellen des Drehbügels zwischen der Geschlossenstellung und der Offenstellung innerhalb des Schlosskörpers verbleibt, angeordnet und somit vorteilhafterweise von außen nicht zugänglich.

Die Leiste, die sich entlang der Kreisbahn zwischen den beiden Anschlagabschnitten der zwei Stege erstreckt, kann dabei insbesondere von dem einen der zwei Stege bis zu dem anderen der zwei Stege an einer in die Richtung des Vorstehens weisenden Außenseite des Drehbügels anliegen. Vorzugsweise weist die Leiste dabei einen unmittelbaren Kontakt zu dieser Außenseite auf. Grundsätzlich kann aber zumindest bereichsweise auch ein gewisser Spalt verbleiben. Ferner ist es bevorzugt, dass sich die Leiste oder zumindest ein Abschnitt der Leiste entlang einer Außenkontur des Drehbügels erstreckt, welche die genannten zwei Stege dem Verlauf der Kreisbahn folgend, insbesondere in direkter Linie, verbindet.

Jeder der zwei Stege weist ferner zwei zueinander entgegengesetzte parallele Seitenflächen auf, die sich zumindest im Wesentlichen entlang der Kreisbahn erstrecken, wobei der Anschlagabschnitt des jeweiligen Stegs durch eine Stirnseite des Stegs gebildet wird, welche die Seitenflächen des Stegs verbindet und zumindest im Wesentlichen senkrecht zur Kreisbahn ausgerichtet ist.

Die beiden Seitenflächen sind dabei vorzugsweise zu derjenigen Richtung parallel ausgerichtet, in die der Steg von dem Drehbügel vorsteht. Dabei können sich die Stege längs der Kreisbahn erstrecken. Je nachdem, in welche Richtung der Steg von dem Drehbügel vorsteht, können die Seitenflächen daher einen entsprechend der Kreisbahn gebogenen Verlauf aufweisen. Insbesondere eher kurze Stege können aber auch einen zur Kreisbahn tangentialen, geraden Verlauf aufweisen.

Quer zum Verlauf der Kreisbahn sowie zur Richtung des Vorstehens können die Seitenflächen, jedenfalls soweit sie von dem Drehbügel vorstehen, durch jeweilige Ränder oder Randseiten des Stegs miteinander verbunden sein. Die Randseiten können dabei auch die genannte Stirnseite umfassen, durch die der Anschlagabschnitt gebildet wird. Vorzugsweise sind die Randseiten zumindest im Wesentlichen senkrecht zu den Seitenflächen ausgerichtet. Das gilt insbesondere auch für die Stirnseite, durch die der Anschlagabschnitt gebildet wird. Von einer zur Kreisbahn senkrechten Ausrichtung weicht die Ausrichtung des Anschlagabschnitts vorzugsweise um höchstens 10° ab.

Ein derartiger Steg mit zwei parallelen Seitenflächen lässt sich vergleichsweise einfach und kostengünstig durch Kaltumformung ausbilden. Insbesondere kann in einem Abschnitt der Längserstreckung des Drehbügels (bzw. des Materials, aus dem der Drehbügel geformt wird), dessen (des Abschnitts) Länge der Länge des auszubildenden Stegs entspricht, ein äußerer Teilbereich des Abschnitts beispielsweise zwischen einem Stempel und einem Auflager aus entgegengesetzten Richtungen so gepresst werden, dass das Material dieses Teilbereichs zu einem Steg umgeformt wird, der senkrecht zu diesen Richtungen zumindest teilweise nach außen vorsteht. Die beiden Seitenflächen des Stegs sind dadurch senkrecht zu den beiden entgegengesetzten Richtungen ausgerichtet, aus denen der Teilbereich gepresst wird.

Bei dieser Ausführungsform ist vorzugsweise ferner vorgesehen, dass die Leiste eine Seitenfläche aufweist, welche sowohl mit einer der Seitenflächen des einen der zwei Stege als auch mit einer der Seitenflächen des anderen der zweite Stege zumindest im Wesentlichen fluchtet. Vorzugsweise erstreckt sich die Leiste dabei zumindest im Wesentlichen von dem einen der zwei Stege bis zum anderen. Die Seitenfläche der Leiste kann die Leiste dabei, zumindest in dem Bereich zwischen den zwei Stegen, in eine Umfangsrichtung um die Längserstreckung des Drehbügels herum begrenzen.

Aufgrund des genannten Fluchtens können die drei Seitenflächen (d.h. die zwei Seitenflächen der beiden Stege sowie die Seitenfläche der Leiste), gegebenenfalls von einem jeweiligen Spalt an den beiden Übergängen abgesehen, eine kontinuierliche Bahn bilden. Dabei können die drei Seitenflächen insbesondere in einer Ebene liegen oder eine entsprechend dem Verlauf der Kreisbahn gebogene Bahn bilden.

Insbesondere können die Seitenflächen dabei in die Richtung weisen, die einem Verstellen des Riegels aus seiner Verriegelungsstellung in seine Entriegelungsstellung entspricht. Der Riegel kann in die Gegenrichtung, also aus der Entriegelungsstellung in seine Verriegelungsstellung, vorgespannt sein und, nachdem der Riegel zum Lösen einer gesperrten Stellung des Drehbügels in seine Entriegelungsstellung versetzt worden ist, gegen die durch die Seitenflächen gebildete Bahn vorgespannt an ihr entlanggleiten, während der Drehbügel verstellt wird. Auf diese Weise kann der Riegel während eines Verstellens des Drehbügels mithilfe der Leiste in seiner Entriegelungsstellung oder jedenfalls einer den Drehbügel nicht sperrenden Stellung gehalten werden.

Gemäß einer weiteren vorteilhaften Ausführungsform weist die Sperrstruktur zumindest einen in eine Schließrichtung weisenden ersten Anschlagabschnitt und einen in eine zu der Schließrichtung entgegengesetzte Öffnungsrichtung weisenden zweiten Anschlagabschnitt auf. Die Schließrichtung entspricht der oben genannten Schließrichtung, in welcher der Drehbügel aus seiner Offenstellung in seine Geschlossenstellung verstellt wird, und die Öffnungsrichtung entspricht der oben genannten Öffnungsrichtung, in welcher der Drehbügel aus seiner Geschlossenstellung in seine Offenstellung verstellt wird. Dass ein Anschlagabschnitt in eine jeweilige Richtung weist, meint insbesondere, dass diese Richtung parallel zu einer Flächennormalen einer Oberfläche des Anschlagabschnitts ausgerichtet ist und von dieser Oberfläche wegführt.

Der in die Schließrichtung weisende erste Anschlagabschnitt kann entlang der Kreisbahn insbesondere näher an dem genannten Endabschnitt des Drehbügels, an dem die genannte Schwenkverbindung mit der Leiste ausgebildet ist, angeordnet sein als der in die Öffnungsrichtung weisende zweite Anschlagabschnitt. Ferner kann die Sperrstruktur zwei von dem Drehbügel vorstehende Stege, insbesondere die beiden vorstehend genannten Stege, umfassen, wobei der eine der zwei Stege den ersten Anschlagabschnitt und der andere der zwei Stege den zweiten Anschlagabschnitt aufweist.

Des Weiteren kann vorgesehen sein, dass der Riegel, wenn sich der Drehbügel in seiner Geschlossenstellung befindet und sich der Riegel in seiner Verriegelungsstellung befindet, den ersten Anschlagabschnitt (bezüglich der Öffnungsrichtung) hintergreift und den Drehbügel dadurch gegen ein Verstellen in die Offenstellung sperrt, und, wenn sich der Drehbügel in seiner Offenstellung befindet und sich der Riegel in einer Teilverriegelungsstellung zwischen seiner Verriegelungsstellung und seiner Entriegelungsstellung befindet, den zweiten Anschlagabschnitt (bezüglich der Schließrichtung) hintergreift und den Drehbügel dadurch gegen einen Verstellen in die Geschlossenstellung sperrt, wobei die Leiste in einem sich in Öffnungsrichtung an den zweiten Anschlagabschnitt, insbesondere unmittelbar, anschließenden Abschnitt ihrer Längserstreckung derart ausgebildet, insbesondere derart geformt und/oder angeordnet, ist, dass sie die Verstellbarkeit des Riegels auf ein Verstellen zwischen der Entriegelungsstellung und der Teilverriegelungsstellung beschränkt.

Mit anderen Worten kann bei einer solchen Ausführungsform der Riegel in der Offenstellung des Drehbügels aufgrund der Beschränkung seiner Verstellbarkeit durch die Leiste ausgehend von seiner Entriegelungsstellung in Richtung der Verriegelungsstellung nur bis in die Teilverriegelungsstellung (und von dort wieder zurück) verstellt werden, wobei die Teilverriegelungsstellung insbesondere etwa mittig zwischen der Verriegelungsstellung und der Entriegelungsstellung liegen kann. Da der Riegel den zweiten Anschlagabschnitt in der Teilverriegelungsstellung bereits hintergreift (wenn auch möglicherweise mit geringerer Überlappung), kann der Drehbügel in seiner Offenstellung gleichwohl mittels des Riegels gesperrt werden. Allerdings verhindert die Leiste, wenn sich der Drehbügel in der Offenstellung befindet, ein Verstellen des Riegels in die Verriegelungsstellung.

Die Leiste kann die Verstellbarkeit des Riegels insbesondere dadurch auf einen Verstellen zwischen der Entriegelungsstellung und der Teilverriegelungsstellung beschränken, dass sich die Leiste in dem in Öffnungsrichtung an den zweiten Anschlagabschnitt anschließenden Abschnitt ihrer Längserstreckung bezüglich des Mittelpunkts der Kreisbahn radial weiter nach außen erstreckt als in dem in Schließrichtung an den ersten Anschlagabschnitt anschließenden Abschnitt ihrer Längserstreckung, so dass sie sich in dem erstgenannten Abschnitt in die Bewegungsbahn des Riegels zwischen der Entriegelungsstellung und der Verriegelungsstellung hinein erstreckt. Bei einem Verstellen des Riegels aus der Entriegelungsstellung schlägt der Riegel dann bereits in der Teilverriegelungsstellung an die Leiste an und kann daher nicht bis in die Verriegelungsstellung verstellt werden. Wenn der zweite Anschlagabschnitt an einem von dem Drehbügel vorstehenden Steg ausgebildet ist, der, wie weiter oben beschrieben, zwei Seitenflächen aufweist, kann sich die Leiste in dem in Öffnungsrichtung an den zweiten Anschlagabschnitt anschließenden Abschnitt ihrer Längserstreckung insbesondere bis zu einer Ebene erstrecken, die zwischen den zwei Seitenflächen des Stegs liegt.

Die erläuterte Beschränkung der Verstellbarkeit des Riegels kann insbesondere dann zweckmäßig sein, wenn das Rahmenschloss eine in dem Schlosskörper aufgenommene Schließeinrichtung, insbesondere einen Schließzylinder, umfasst, die mittels eines der Schließeinrichtung zugeordneten Schlüssels betätigbar ist und, beispielsweise über einen Mitnehmer, derart zum Verstellen des Riegels mit diesem gekoppelt ist, dass ein (von möglichem Spiel abgesehen) eindeutiger Zusammenhang zwischen einer jeweiligen Drehstellung des Schlüssels und einer jeweiligen Stellung des Riegels besteht, wobei der Schlüssel von der Schließeinrichtung nur dann abgezogen werden kann, wenn er sich in einer der Verriegelungsstellung des Riegels entsprechenden Drehstellung befindet. Wenn die Leiste die Verstellbarkeit des Riegels nicht beschränkt, kann also sowohl in der Geschlossenstellung als auch in der Offenstellung des Drehbügels der Riegel in seine Verriegelungsstellung verstellt und der Schlüssel dann abgezogen werden. Durch die genannte, die Verstellbarkeit des Riegels beschränkende Ausbildung der Leiste kann jedoch erreicht werden, dass - bei ansonsten gleicher Funktionalität des Rahmenschlosses - der Riegel nur noch in der Geschlossenstellung, nicht jedoch in der Offenstellung des Drehbügels in die Verriegelungsstellung verstellt werden kann und der Schlüssel daher nur abgezogen werden kann, wenn der Drehbügel in seiner Geschlossenstellung durch den Riegel verriegelt ist. Dies entspricht einer sogenannten Key-Retaining-Funktion des Rahmenschlosses, die speziell in einigen europäischen Ländern nachgefragt ist.

Gemäß dieser Ausführungsform kann die Key-Retaining-Funktion vorteilhafterweise mittels der Leiste, insbesondere einer entsprechend ausgebildeten Struktur der Leiste, erzielt werden und braucht somit nicht durch eine spezielle und möglicherweise die Stabilität des Drehbügels beeinträchtigende Struktur des Drehbügels verwirklicht zu werden. Der Drehbügel kann daher unabhängig davon, ob eine Key-Retaining-Funktion vorliegen soll oder nicht, stets gleich ausgebildet sein, was insbesondere Vorteile für die Herstellung des Drehbügels mit sich bringt. Je nach Bedarf kann die Key-Retaining-Funktion durch Anordnen einer entsprechend ausgebildeten Leiste an dem Drehbügel verwirklicht werden oder auch nicht. Es besteht grundsätzlich sogar die Möglichkeit, durch Austausch der Leiste die Key-Retaining-Funktion nachträglich vorzusehen oder zu entfernen.

Insofern bezieht sich die Erfindung auch auf ein Rahmenschlosssystem mit einem erfindungsgemäßen Rahmenschloss, das also eine Drehbügelanordnung mit einem Drehbügel und einer Leiste umfasst und insbesondere auf eine oder mehrere der vorstehend beschriebenen Weisen ausgebildet sein kann, wobei die Leiste in der vorstehend genannten Weise dazu ausgebildet ist, eine Key-Retaining-Funktion zu verwirklichen, und das Rahmenschlosssystem zusätzlich zu dieser Leiste eine weitere Leiste umfasst, die wahlweise anstelle der genannten Leiste an dem Drehbügel anordenbar ist, wobei die weitere Leiste in einem Abschnitt ihrer Längserstreckung, der dem genannten in Öffnungsrichtung an den zweiten Anschlagabschnitt anschließenden Abschnitt entspricht, derart ausgebildet ist, dass sie die Verstellbarkeit des Riegels von der Entriegelungsstellung bis in die Verriegelungsstellung zulässt. Im Unterschied zu der genannten Leiste beschränkt die weitere Leiste die Verstellbarkeit des Riegels also nicht auf die genannte Teilverriegelungsstellung, so dass der Riegel in der Offenstellung des Drehbügels dieselbe Verstellbarkeit aufweist, insbesondere bis in die Verriegelungsstellung verstellbar ist, in welche der Riegel auch in der Geschlossenstellung des Drehbügels aus seiner Entriegelungsstellung verstellt werden kann, um den jeweiligen Anschlagabschnitt zu hintergreifen und den Drehbügel dadurch gegen ein Verstellen zu sperren.

Bei einem solchen Rahmenschlosssystem ist es folglich möglich, durch Auswählen der entsprechenden Leiste das resultierende Rahmenschloss je nach Anforderung oder Vorliebe mit einer Key-Retaining-Funktion auszustatten oder diese wegzulassen. Das Rahmenschloss des Rahmenschlosssystems kann dabei, jedenfalls zunächst, in noch unmontiertem Zustand vorliegen, so dass gleich bei der Montage des Rahmenschlosses die bevorzugte Version der Leiste an dem Drehbügel angeordnet werden kann.

Im Folgenden wird die Erfindung lediglich beispielhaft anhand der Figuren weiter erläutert.
- Fig. 1: zeigt eine Ausführungsform eines erfindungsgemäßen Rahmenschlosses aus einer zur Ebene der Kreisbahn senkrechten Blickrichtung.
- Fig. 2: zeigt die Drehbügelanordnung des Rahmenschlosses zusammen mit einer daran angeordneten Feder aus im Vergleich zu Fig. 1 entgegengesetzter Blickrichtung.
- Fig. 3: zeigt die Drehbügelanordnung aus einer zur Ebene der Kreisbahn schräg ausgerichteten Blickrichtung.
- Fig. 4: entspricht weitgehend der Fig. 2, wobei allerdings die Leiste gegenüber dem Drehbügel ausgeschwenkt ist.
- Fig. 5: entspricht weitgehend der Fig. 3, wobei allerdings die Leiste gegenüber dem Drehbügel ausgeschwenkt ist.
- Fig. 6: zeigt ein Detail der Drehbügelanordnung im Zusammenwirken mit dem Riegel des Rahmenschlosses.
- Fig. 7: zeigt einen Querschnitt der Drehbügelanordnung senkrecht zum Verlauf der Kreisbahn.

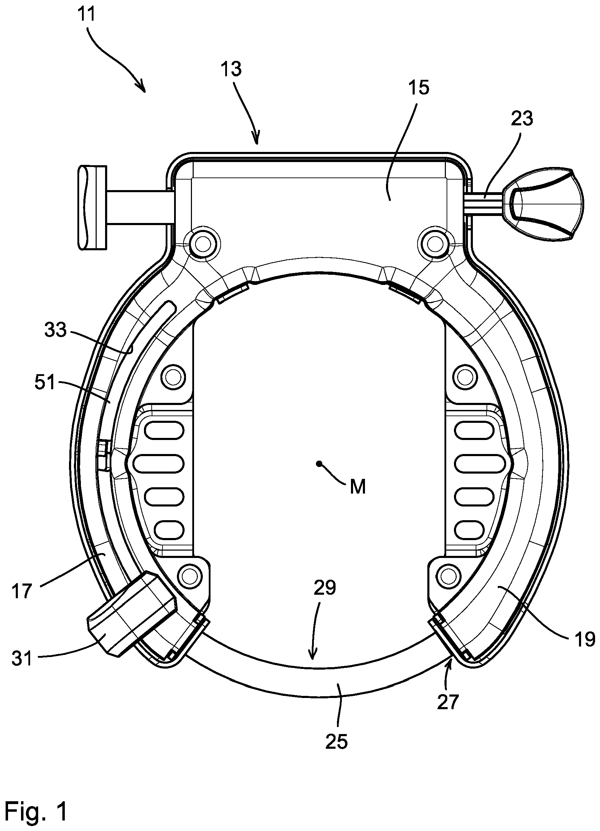

In Fig. 1 ist eine Ausführungsform eines erfindungsgemäßen Rahmenschlosses 11 dargestellt. Das Rahmenschloss 11 umfasst einen Schlosskörper 13 mit einem Gehäuse 15, das zumindest im Wesentlichen C-förmig ausgebildet ist, wobei ein mittlerer Abschnitt der C-Form quaderförmig verbreitert ist und die beiden übrigen Abschnitte einen ersten Schenkel 17 und einen zweiten Schenkel 19 des Schlosskörpers 13 bilden, die sich aus Ecken der Quaderform heraus erstrecken.

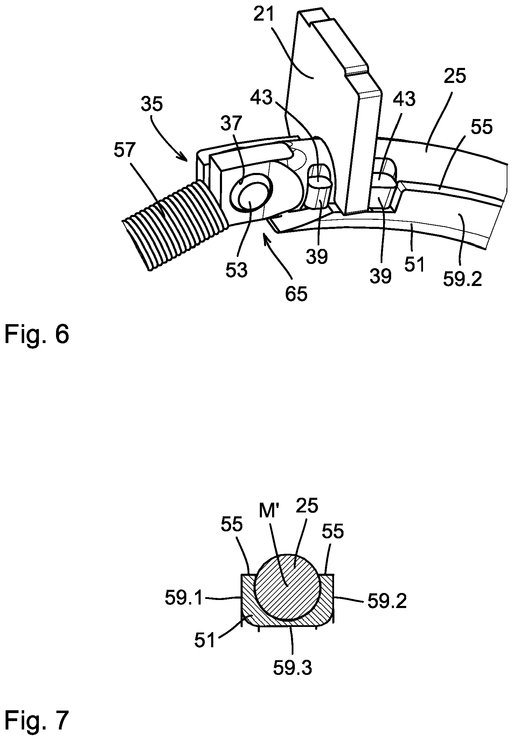

In dem mittleren Abschnitt sind eine nicht sichtbare Schließeinrichtung in Form eines Schließzylinders sowie ein mit der Schließeinrichtung gekoppelter Riegel 21 (vgl. Fig. 6) aufgenommen. Die Schließeinrichtung lässt sich nur mittels eines der Schließeinrichtung zugeordneten Schlüssels 23 regulär betätigen. Der Riegel 21 ist dabei derart mit der Schließeinrichtung gekoppelt, dass er durch eine Betätigung der Schließeinrichtung mittels des Schlüssels 23 zwischen einer Entriegelungsstellung und einer Verriegelungsstellung verstellbar ist. Insbesondere besteht dabei ein eindeutiger Zusammenhang zwischen der jeweiligen Stellung des Riegels 21 und der jeweiligen Drehstellung des Schlüssels 23.

Das Rahmenschloss 11 weist ferner einen Drehbügel 25 auf, der sich längs einer Kreisbahn erstreckt und zumindest teilweise in dem Gehäuse 15, nämlich in einer Drehbügelaufnahme, die sich durch den ersten Schenkel 17 sowie in den quaderförmigen mittleren Abschnitt des Schlosskörpers 13 erstreckt, aufgenommen ist. Der Drehbügel 25 ist dabei relativ zu dem Schlosskörper 13 derart gelagert, dass er entlang seiner Längserstreckung, also entlang der genannten Kreisbahn, zwischen einer Offenstellung und einer Geschlossenstellung verstellbar ist. Der Drehbügel 25 ist aus Metall und weist abschnittsweise einen konstanten Querschnitt auf, der kreisrund ist (vgl. Fig. 7), grundsätzlich aber auch eine andere Form, beispielsweise die eines regelmäßigen Vielecks, aufweisen könnte. Die Abschnitte, die den konstanten Querschnitt aufweisen, bilden dabei gemeinsam einen (weit) überwiegen Teil, beispielsweise über 80%, insbesondere mindestens 90%, der Längserstreckung des Drehbügels 25.

In der Geschlossenstellung ragt der Drehbügel 25 mit einem freien Ende 27 aus dem ersten Schenkel 17 heraus und erstreckt sich bis zum zweiten Schenkel 19 und mit dem freien Ende 27 in diesen hinein, so dass er die beiden Schenkel 17, 19 verbindet und der Schlosskörper 13 und der Drehbügel 25 dadurch einen geschlossenen Ring bilden. Auf diese Weise kann der Drehbügel 25 bei entsprechender Anordnung des Rahmenschlosses 11 an dem Rahmen eines Zweirads (nicht dargestellt) ein Rad des Zweirads zwischen dessen Speichen durchgreifen und das Rad somit gegen Drehung sperren.

In der Offenstellung dagegen ist der Drehbügel 25 zumindest im Wesentlichen vollständig innerhalb des Gehäuses 15 aufgenommen oder ragt nur geringfügig, insbesondere nur mit dem freien Ende 27, aus dem ersten Schenkel 17 des Gehäuses 15 heraus, so dass zwischen den beiden Schenkeln 17, 19 ein Freiraum verbleibt, innerhalb dessen die Speichen des Rades zwischen den Schenkeln 17, 19 des Rahmenschlosses 11 hindurch bewegt werden können. Somit gibt der Drehbügel 25 in seiner Offenstellung das Rad des Zweirads für eine Drehung frei.

Der Abschnitt des Drehbügels 25, der in der Geschlossenstellung außerhalb des Gehäuses 15 angeordnet ist, bildet einen Blockierabschnitt 29 des Drehbügels 25, der durchgehend den genannten kreisrunden Querschnitt aufweist. Der Blockierabschnitt 29 erstreckt sich entlang der genannten Kreisbahn über einen Winkelbereich von etwa 60°. Der übrige Abschnitt des Drehbügels 25, der stets innerhalb des Gehäuses 15 angeordnet ist, bildet einen Lagerungsabschnitt 41 des Drehbügels 25.

Sofern der Drehbügel 25 nicht durch den Riegel 21 dagegen gesperrt ist, verstellt zu werden, kann der Drehbügel 25 manuell mittels einer Handhabe 31 aus der Offenstellung in die Geschlossenstellung und umgekehrt aus der Geschlossenstellung zurück in die Offenstellung entlang der Kreisbahn verschoben werden, was einer Drehung des Drehbügels 25 um den Mittelpunkt M der Kreisbahn entspricht. Die Handhabe 31 ist dazu mit dem Drehbügel 25 gekoppelt und erstreckt sich senkrecht zur Ebene der genannten Kreisbahn, entlang welcher sich der Drehbügel 25 erstreckt, durch einen in dem ersten Schenkel 17 ausgebildeten Schlitz 33 hindurch. Der Schlitz 33 weist dabei einen kreisbogenförmigen Verlauf auf, wobei die Kreisbogenform des Schlitzes 33 dem Verlauf der Kreisbahn entspricht, insbesondere koaxial zur Kreisbahn ist, also denselben Mittelpunkt M aufweist.

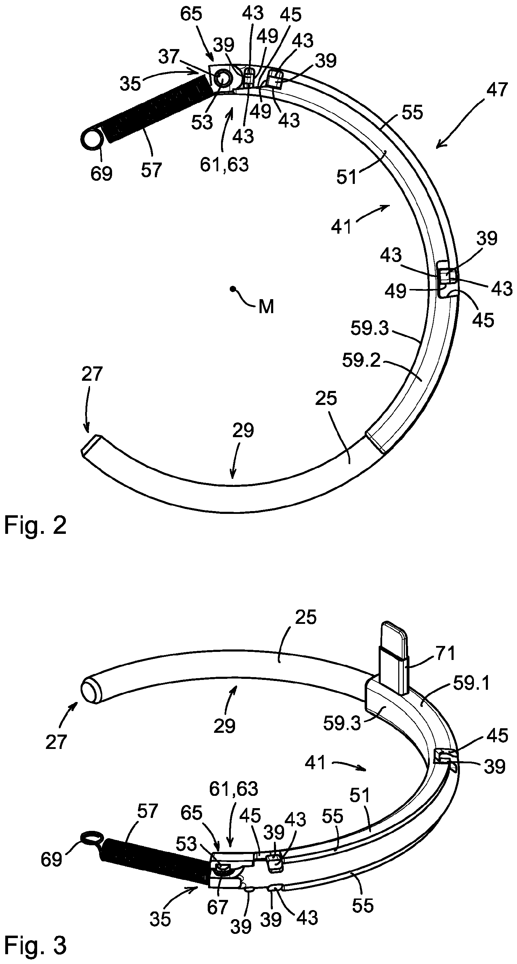

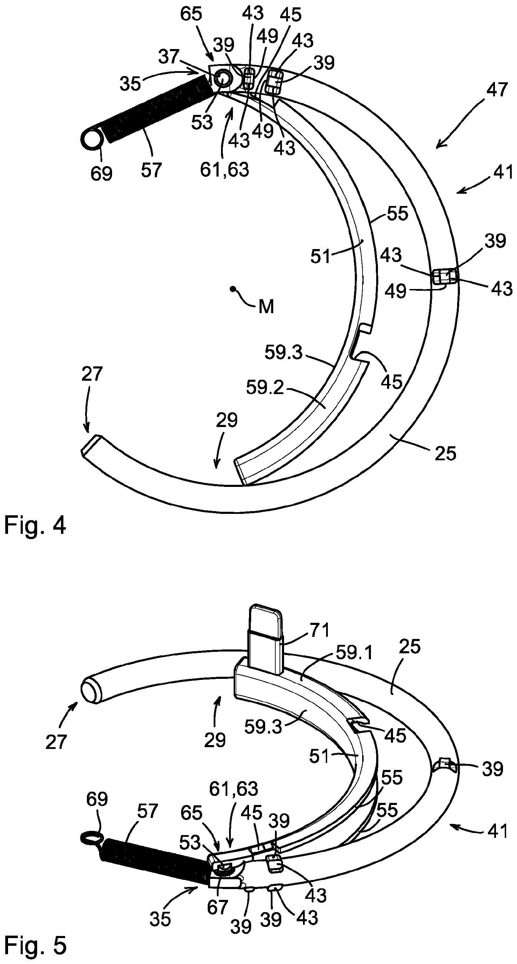

Die Fig. 1 zeigt das Rahmenschloss 11 aus einer zu der genannten Kreisbahn senkrechten Blickrichtung. In den Fig. 2 und 4 ist die Blickrichtung gerade entgegengesetzt.

Die Fig. 2 bis 5 zeigen eine Drehbügelanordnung 47 des Rahmenschlosses 11, die zum einen den Drehbügel 25 und zum anderen eine Leiste 51 umfasst, zusammen mit einer Feder 57. In diesen Figuren ist zu erkennen, dass das freie Ende 27 des Drehbügels 25 eine konische Abfasung aufweist. Mit seinem dazu entgegengesetzten Ende ist der Drehbügel 25 mit der Feder 57 und über die Feder 57 an dem Schlosskörper 13 befestigt. Insofern bildet dieses Ende ein gekoppeltes Ende 35 des Drehbügels 25.

An dem gekoppelten Ende 35 ist der Drehbügel 25 beidseitig senkrecht zur Ebene der Kreisbahn abgeflacht und weist, unter anderem zur Kopplung mit dem Schlosskörper 13, ein sich senkrecht zur Ebene der Kreisbahn durch den Drehbügel 25 hindurch erstreckendes Loch 37 auf.

Um von dem Riegel 21 gegen ein Verstellen zwischen der Offenstellung und der Geschlossenstellung gesperrt werden zu können, weist der Drehbügel 25 eine Sperrstruktur auf, die mehrere Stege 39 umfasst. Jeder dieser Stege 39 steht senkrecht zur Ebene der Kreisbahn von dem Drehbügel 25 zumindest teilweise vor. Insbesondere stehen die Stege 39 dabei jeweils über den genannten kreisrunden Querschnitt vor, der in Fig. 7 gezeigt ist und den insbesondere entlang der Kreisbahn an den jeweiligen Steg 39 angrenzende Abschnitte des Drehbügels 25 aufweisen. Die Stege 39 erstrecken sich über eine Außenkontur dieses Querschnitts hinaus nach außen.

Die Stege 39 weisen jeweils zwei zueinander entgegengesetzte parallele Seitenflächen 43 auf, die bezüglich des Mittelpunkts M der Kreisbahn radial nach außen bzw. nach innen weisend ausgerichtet sind und sich folglich im Wesentlichen tangential zur Kreisbahn erstrecken. Außerdem weisen die Stege 39 jeweils einen Anschlagabschnitt 49 auf, der durch eine Stirnseite des jeweiligen Stegs 39 gebildet wird, welche die beiden Seitenflächen 43 verbindet, und zumindest im Wesentlichen senkrecht zum Verlauf der Kreisbahn ausgerichtet ist (vgl. auch Fig. 6).

Der Riegel 21 und der Drehbügel 25 sind derart relativ zueinander angeordnet, dass sich der Riegel 21 in seiner Verriegelungsstellung zumindest teilweise in der Bewegungsbahn der Stege 39 befindet, welche die Stege 39 bei einem Verstellen des Drehbügels 25 entlang der Kreisbahn ungehindert durchlaufen würden. Dadurch hintergreift der Riegel 21, wenn sich der Drehbügel 25 in seiner Geschlossenstellung oder seiner Offenstellung befindet und sich der Riegel 21 in seiner Verriegelungsstellung befindet, den Anschlagabschnitt 49 des jeweiligen bezüglich der Verstellrichtung nächstliegenden Stegs 39. Wenn der Drehbügel 25 in die entsprechende Richtung verstellt wird, schlägt dieser Anschlagabschnitt 49 folglich an dem Riegel 21 an, so dass der Drehbügel 25 dadurch gegen ein weiteres Verstellen in diese Richtung gesperrt wird. In der Detaildarstellung der Fig. 6 ist dies beispielhaft für den Zustand dargestellt, in dem sich der Drehbügel 25 in seiner Geschlossenstellung befindet und sich der Riegel 21 in seine Verriegelungsstellung befindet.

Die an dem Drehbügel 25 angeordnete Leiste 51 der Drehbügelanordnung 47 erstreckt sich wie der Drehbügel 25 längs der Kreisbahn und weist daher ähnlich wie der Drehbügel 25 zumindest im Wesentlichen eine Kreisbogenform auf. Die Leiste 51, die als eigenstabiles Teil aus Kunststoff ausgebildet ist, ist dabei derart geformt und an dem Drehbügel 25 angeordnet, dass sie den Drehbügel 25 entlang eines Teils seiner Längserstreckung und eines Teils seines Umfangs (in Umfangsrichtung um den Verlauf der Kreisbahn herum) überdeckt. Dort, wo die Leiste 51 den Drehbügel 25 überdeckt, liegt sie flächig an ihm an.

Die Leiste 51 greift mit einem an der Leiste 51 ausgebildeten Zapfen 53 in das Loch 37 an dem gekoppelten Ende 35 des Drehbügels 25 ein und erstreckt sich von dort aus über mehr als die Hälfte der Längserstreckung des Drehbügels 25, nämlich zumindest im Wesentlichen über den gesamten Lagerungsabschnitt 41.

An dem in das Loch 37 eingreifenden Zapfen 53 ist auch die genannte Feder 57 befestigt. Dazu weist die Feder 53 an einem Ende eine Öse 67 auf, die der Zapfen 53 durchgreift, bevor er in das Loch 37 eingreift. Auf diese Weise ist die Feder 53 zwischen dem Drehbügel 25 und der Leiste 51 gefangen (vgl. Fig. 3 und 5). An dem der Öse 67 entgegengesetzten Ende weist die Feder 53 eine weitere Öse 69 auf, über die sie mit dem Schlosskörper 13 gekoppelt ist.

An der Leiste 51 ist ein Befestigungsansatz 71 integral ausgebildet, der senkrecht zur Ebene der Kreisbahn von der Leiste 51 vorsteht (vgl. Fig. 3 und 5). Der Befestigungsansatz 71 dient der Befestigung der Handhabe 31 an der Leiste 51. Die Handhabe 31 ist dadurch über die Leiste 51 mit dem Drehbügel 25 gekoppelt, so dass die Leiste 51 insofern als "Verbinder" fungiert. Insbesondere braucht auf diese Weise die Handhabe 31 bzw. der Befestigungsansatz 71 nicht unmittelbar am Drehbügel 25 vorgesehen zu werden.

Die Leiste 51 weist über einen Großteil ihrer Längserstreckung einen konstanten Querschnitt auf (vgl. Fig. 7). Diesen konstanten Querschnitt weist die Leiste 51 insbesondere zwischen den Anschlagabschnitten 49 der Stege 39 auf, die der Geschlossenstellung bzw. der Offenstellung des Drehbügels 25 entsprechen und folglich hintergriffen werden, wenn sich der Drehbügel 25 in seiner Geschlossenstellung bzw. seiner Offenstellung befindet und sich der Riegel 21 in seiner Verriegelungsstellung befindet.

Wie in Fig. 7 zu erkennen ist, erstreckt sich die Leiste 51 - zumindest in denjenigen Abschnitten ihrer Längserstreckung, in denen sie den genannten konstanten Querschnitt aufweist - in Umfangsrichtung um den Drehbügel 25 (also um den Verlauf der Kreisbahn herum) über mehr als die Hälfte des Umfangs des Drehbügels 25. Bezogen auf einen Mittelpunkt M' des Querschnitts des Drehbügels 25, der einem Flächenschwerpunkt dieses Querschnitts entspricht, erstreckt sich die Leiste 51 in Umfangsrichtung um den Drehbügel 25 über einen Winkelbereich von etwa 225°. Dabei liegt die Leiste 51 flächig an der Außenkontur des Querschnitts des Drehbügels 25, also entlang der Längserstreckung des Drehbügels an dessen Oberfläche, an. Dazu weist der Querschnitt der Leiste 51 eine zum Querschnitt des Drehbügels 25 komplementäre Innenkontur auf, die in dem gezeigten Beispiel aufgrund der Kreisform des Querschnitts des Drehbügels 25 eine Kreisbogenform aufweist.

Aufgrund der genannten Erstreckung der Leiste 51 in Umfangsrichtung um den Drehbügel 25, weist die Leiste 51 einen C-förmigen Querschnitt auf, mit dem die Leiste 51 den Drehbügel 25 bezüglich dreier zu dem genannten Mittelpunkt M' des Querschnitts des Drehbügels 25 radialer Richtungen überdeckt, die sich in ihrer Ausrichtung um jeweils 90° unterscheiden. Konkret überdeckt die Leiste 51 den Drehbügel 25 dabei sowohl in zur Ebene der Kreisbahn senkrechter Richtung als auch in dazu entgegengesetzter Richtung (in Fig. 7 nach links bzw. rechts) als auch in zum Mittelpunkt M der Kreisbahn, also radial nach innen, weisender Richtung (in Fig. 7 nach unten). Bezüglich der Ebene der Kreisbahn ist der Querschnitt dabei spiegelsymmetrisch ausgebildet.

Nach außen hin ist der Querschnitt der Leiste 51 bezüglich der drei genannten Richtungen abgeflacht. Dadurch weist die Leiste 51 drei Außenseiten 59 auf, die jeweils flächig ausgebildet sind. Eine erste Außenseite 59.1 sowie eine zweite Außenseite 59.2 sind parallel zueinander sowie zur Ebene der Kreisbahn ausgerichtet (liegen also jeweils in einer zur Ebene der Kreisbahn parallelen Ebene) und begrenzen die Leiste 51 in entgegengesetzte Richtungen senkrecht zur Ebene der Kreisbahn. Eine dritte Außenseite 59.3 ist senkrecht zur Ebene der Kreisbahn ausgerichtet (weist also die Form eines kreisförmigen Bandes bzw. eine Zylindermantelform auf) und begrenzt die Leiste 51 in zum Mittelpunkt M der Kreisbahn radialer Richtung, nämlich im gezeigten Beispiel radial nach innen. Auf diese Weise kann die Leiste 51 mit ihren Außenseiten 59 an entsprechend ausgerichteten flächigen Innenwänden der Drehbügelaufnahme entlanggleiten, so dass die gesamte Drehbügelanordnung 47 zuverlässig geführt wird.

In Umfangsrichtung um den Drehbügel 25 wird der Querschnitt der Leiste 51 durch zwei Seitenflächen 55 begrenzt, die bezüglich des Mittelpunkts M der Kreisbahn radial nach außen weisen. Die Seitenflächen 55 erstrecken sich entlang der Kreisbahn jeweils von einem der Geschlossenstellung des Drehbügels 25 entsprechenden Steg 39 bis zu einem der Offenstellung des Drehbügels 25 entsprechenden Steg 39 und fluchten dabei mit den beiden bezüglich des Mittelpunkts M der Kreisbahn radial nach außenweisenden Seitenflächen 43 dieser beiden Stege 39. Dadurch bilden die jeweils drei Seitenflächen 49, 55 eine im Wesentlichen kontinuierliche Bahn, an welcher der Riegel 21 anliegen und entlanggleiten kann, während der Drehbügel 25 aus seiner Offenstellung in die Geschlossenstellung bzw. aus seiner Geschlossenstellung in die Offenstellung verstellt wird.

Durch das Umgreifen des Drehbügels 25 über mehr als die Hälfte von dessen Umfang ist die Leiste 51 in zum Mittelpunkt M der Kreisbahn radialer Richtung formschlüssig an dem Drehbügel 25 befestigt. Dabei weist die Leiste 51 eine Elastizität auf, die es erlaubt, diesen Formschluss zu überwinden. Dadurch kann die Leiste 51 einrastend an dem Drehbügel 25 befestigt bzw. wieder von diesem gelöst werden.

Ein Endabschnitt 61 des Drehbügels 25, in dem das genannte Loch 37 ausgebildet ist, und ein dazu korrespondierende Endabschnitt 63 der Leiste 51, in dem der Zapfen 53 ausgebildet ist, bilden eine Schwenkverbindung 65, die es durch das Zusammenwirken des Zapfens 53 und des Lochs 37 ermöglicht, dass die Leiste 51 relativ zu dem Drehbügel 25 um die Längsachse des Zapfen 53, die der Zylinderachse der Zylinderform des Zapfen 53 entspricht, geschwenkt werden kann.

Für das Anordnen der Leiste 51 an dem Drehbügel 25 bei der Montage der Drehbügelanordnung 47 (bzw. des gesamten Rahmenschlosses 11) kann die Leiste 51 daher zunächst mit ihrem Zapfen 53 in das Loch 37 des Drehbügels 25 eingesteckt werden, so dass die genannte Schwenkverbindung 65 ausgebildet wird und die Leiste 51 relativ zu dem Drehbügel 25 die in den Fig. 4 und 5 gezeigte Stellung einnimmt. Aus dieser Stellung kann die Leiste 51 dann bezüglich des Mittelpunkts M der Kreisbahn radial von innen nach außen gegen den Drehbügel 25 geschwenkt werden, bis sie die in den Fig. 2 und 3 gezeigte Stellung einnimmt, in der sie flächig an ihm anliegt und ihn in den Abschnitten, die den genannten konstanten Querschnitt (vgl. Fig. 7) aufweisen, umgreift. Kurz vor Erreichen dieser Stellung werden dabei die Schenkel der C-Form des Querschnitts der Leiste 51 vorübergehend aufgeweitet, so dass die Leiste 51 an dem Drehbügel 25 einschnappt und dadurch der Formschluss in radialer Richtung einrastend herbeigeführt ist.

Ein zusätzlicher Formschluss zwischen der Leiste 51 und dem Drehbügel 25 in Richtung entlang der Kreisbahn ergibt sich außerdem daraus, dass sich die an dem Drehbügel 25 angeordnete Leiste 51 entlang der Kreisbahn zwischen den Stegen 39 mit den Anschlagabschnitten 49, die der Geschlossenstellung bzw. der Offenstellung des Drehbügels 25 entsprechen, erstreckt. Dabei erstreckt sich die Leiste 51 auf beiden bezüglich der Ebene der Kreisbahn entgegengesetzten Seiten des Drehbügels 25 jeweils von einem der Geschlossenstellung entsprechenden Steg 39 entlang einer dem Verlauf der Kreisbahn folgenden Außenkontur des Drehbügels 25 bis zu einem in dieselbe Richtung vorstehenden, der Offenstellung entsprechenden Steg 39. Die Leiste 51 weist dazu an entsprechender Stelle entlang ihrer Längserstreckung mit diesen Steg 39 korrespondierende Aussparungen 45 auf, aufgrund derer sich die Leiste 51 in Umfangsrichtung um den Drehbügel 25 weniger weit erstreckt als in einem Abschnitt ihrer Längserstreckung mit dem genannten konstanten Querschnitt, insbesondere als in dem Abschnitt zwischen den genannten, der Geschlossenstellung bzw. Offenstellung entsprechenden Stegen 39. Durch das Eingreifen der Stege 39 in diese Aussparungen 45 ist die Leiste 51 zwischen diesen Stegen 39 gefangen und somit auch entlang der Kreisbahn formschlüssig an dem Drehbügel 25 befestigt. Neben den genannten Stegen 39 und Aussparungen 45 können an dem Drehbügel 25 und der Leiste 51 noch weitere Erhebungen bzw. Ausnehmungen ausgebildet sein, durch deren Ineinandergreifen bezüglich des Verlaufs der Kreisbahn ein Formschluss zwischen dem Drehbügel 25 und der Leiste 51 gebildet wird.

Die Aussparungen 45 erstrecken sich entlang der Kreisbahn nicht lediglich über die Länge des jeweiligen Stegs 39, sondern auf der Seite des jeweiligen Anschlagabschnitts 49 auch darüber hinaus, damit dort ein Freiraum geschaffen ist, in welchem der Riegel 21 den Anschlagabschnitt 49 hintergreifen kann. Abweichend von der in den Figuren gezeigten Ausführungsform können die Aussparungen 45, in die ein der Offenstellung entsprechender Steg 39 eingreift, in dem an den Anschlagabschnitt 49 angrenzenden Bereich kleiner als dargestellt sein, nämlich indem sich die Leiste 51 in diesem Bereich bezüglich des Mittelpunkts M der Kreisbahn radial weiter nach außen erstreckt als dargestellt, insbesondere bis etwa mittig zwischen die beiden Seitenflächen 43 dieses Stegs 39. Dadurch kann die Leiste 51 die Verstellbarkeit des Riegels 21, wenn sich der Drehbügel 25 in seiner Offenstellung befindet, auf ein Verstellen zwischen der Entriegelungsstellung und einer Teilverriegelungsstellung beschränken, wobei die Teilverriegelungsstellung zwischen der Entriegelungsstellung und der Verriegelungsstellung liegt. Dadurch kann eine Key-Retaining-Funktion verwirklicht werden, bei welcher der Schlüssel 23 in der Offenstellung des Drehbügels nicht von dem Schlosskörper 13 abgezogen werden kann, da der Riegel 21 nicht in die Verriegelungsstellung verstellt werden kann und somit auch der Schlüssel 23 nicht in eine entsprechende, ein Abziehen erlaubende Drehstellung verstellt werden kann.

Eine in dieser alternativen Weise ausgebildete Leiste 51 kann bei dem Rahmenschloss 11 auch zusätzlich zu der gezeigten Leiste 51 vorgesehen sein, wodurch dann ein Rahmenschlosssystem gebildet wird, bei dem wahlweise die eine oder die andere Leiste 51 an dem Drehbügel 25 angeordnet werden kann, um wahlweise, je nach Bedarf, die genannte Key-Retaining-Funktion zu verwirklichen.

### Bezugszeichen

- 11: Rahmenschloss
- 13: Schlosskörper
- 15: Gehäuse
- 17: erster Schenkel
- 19: zweiter Schenkel
- 21: Riegel
- 23: Schlüssel
- 25: Drehbügel
- 27: freies Ende
- 29: Blockierabschnitt
- 31: Handhabe
- 33: Schlitz
- 35: gekoppeltes Ende
- 37: Loch
- 39: Steg
- 41: Lagerungsabschnitt
- 43: Seitenfläche
- 45: Aussparung
- 47: Drehbügelanordnung
- 49: Anschlagabschnitt
- 51: Leiste
- 53: Zapfen
- 55: Seitenfläche
- 57: Feder
- 59: Außenseite
- 61: Endabschnitt
- 63: korrespondierender Endabschnitt
- 65: Schwenkverbindung
- 67: Öse
- 69: weitere Öse
- 71: Befestigungsansatz
- M: Mittelpunkt der Kreisbahn
- M': Mittelpunkt des Querschnitts des Drehbügels

## Patentansprüche

1. Rahmenschloss (11) für ein Zweirad mit einem Schlosskörper (13), der einen Riegel (21) umfasst, sowie mit einer Drehbügelanordnung (47), die einen Drehbügel (25), vorzugweise aus Metall, umfasst,
wobei sich der Drehbügel (25) längs einer Kreisbahn erstreckt und relativ zu dem Schlosskörper (13) entlang der Kreisbahn zwischen einer Offenstellung, in der er ein Rad des Zweirads für eine Drehung freigibt, und einer Geschlossenstellung, in der er das Rad gegen Drehung sperrt, verstellbar ist,
wobei der Drehbügel (25) eine Sperrstruktur mit einem Anschlagabschnitt (49) aufweist,
wobei der Riegel (21) zwischen einer Entriegelungsstellung und einer Verriegelungsstellung verstellbar ist,
wobei der Riegel (21), wenn sich der Drehbügel (25) in seiner Geschlossenstellung befindet und sich der Riegel (21) in seiner Verriegelungsstellung befindet, den Anschlagabschnitt (49) hintergreift und den Drehbügel (25) dadurch gegen ein Verstellen in die Offenstellung sperrt, **dadurch gekennzeichnet dass** die Drehbügelanordnung (47) eine Leiste (51), vorzugsweise aus Kunststoff, umfasst und
wobei die Leiste (51) an dem Drehbügel (25) angeordnet ist, sich längs der Kreisbahn erstreckt und derart ausgebildet ist, dass sie den Drehbügel (25) entlang zumindest eines Teils seiner Längserstreckung und zumindest eines Teils seines Umfangs überdeckt,
und wobei sich die Leiste (51) über mehr als 180°, vorzugsweise über mindestens 210°, insbesondere über etwa 225°, in Umfangsrichtung um den Drehbügel (25) erstreckt.

2. Rahmenschloss nach Anspruch 1,
wobei die Leiste (51) den Drehbügel (25) zumindest bereichsweise in zur Ebene der Kreisbahn senkrechter Richtung, zumindest bereichsweise in dazu entgegengesetzter Richtung sowie zumindest bereichsweise in zum Mittelpunkt (M) der Kreisbahn oder davon weg weisender Richtung überdeckt.

3. Rahmenschloss nach Anspruch 1 oder 2,
wobei die Leiste (51) entlang ihrer Längserstreckung an dem Drehbügel (25) anliegt.

4. Rahmenschloss nach einem der vorstehenden Ansprüche,
wobei die Leiste (51) als von dem Drehbügel (25) separates, formstabiles und/oder elastisches Teil ausgebildet ist.

5. Rahmenschloss nach einem der vorstehenden Ansprüche,
wobei die Leiste (51) formschlüssig, insbesondere einrastend, an dem Drehbügel (25) befestigt ist.

6. Rahmenschloss nach einem der vorstehenden Ansprüche,
wobei ein Endabschnitt (61) des Drehbügels (25) und ein korrespondierender Endabschnitt (63) der Leiste (51) eine Schwenkverbindung (65) bilden, die einen Zapfen (53) aufweist, der sich entlang einer zur Ebene der Kreisbahn senkrechten Längsachse erstreckt,
wobei die Leiste (51) um die Längsachse des Zapfens (53) relativ zu dem Drehbügel (25) schwenkbar ist.

7. Rahmenschloss nach den Ansprüchen 5 und 6,
wobei der Formschluss zwischen der Leiste (51) und dem Drehbügel (25) durch Schwenken der Leiste (51) um die Längsachse des Zapfens (53) auf den Drehbügel (25) zu herbeiführbar ist.

8. Rahmenschloss nach Anspruch 6 oder 7,
wobei in dem Endabschnitt (61) des Drehbügels (25) ein Loch (37) ausgebildet ist und der Zapfen (53) an dem korrespondierenden Endabschnitt (63) der Leiste (51) ausgebildet ist und in das Loch (37) eingreift.

9. Rahmenschloss nach einem der Ansprüche 6 bis 8,
wobei das Rahmenschloss (11) ferner eine Feder (57), insbesondere eine Schraubenfeder, zum Vorspannen des Drehbügels (25) relativ zu dem Schlosskörper (13) umfasst,
und wobei die Feder (57), insbesondere mit einer an einem Ende der Feder (57) ausgebildeten Öse (67), an dem Zapfen (53) befestigt ist.

10. Rahmenschloss nach einem der vorstehenden Ansprüche,
wobei die Leiste (51) eine Handhabe (31) zum manuellen Verstellen des Drehbügels (25) oder einen Befestigungsansatz (71) zur Befestigung einer solchen Handhabe (31) an der Leiste (51) aufweist,
und wobei die Handhabe (31) oder der Befestigungsansatz (71) entweder bezüglich des Mittelpunkts (M) der Kreisbahn radial nach außen oder senkrecht zur Ebene der Kreisbahn von der Leiste (51) vorsteht.

11. Rahmenschloss nach einem der vorstehenden Ansprüche,
wobei der Drehbügel (25) entlang seiner Längserstreckung wenigstens eine Erhebung aufweist, die in eine Ausnehmung der Leiste (51) eingreift, so dass bezüglich des Verlaufs der Kreisbahn ein Formschluss zwischen der Leiste (51) und dem Drehbügel (25) gebildet ist,
und/oder
wobei der Drehbügel (25) entlang seiner Längserstreckung wenigstens eine Ausnehmung aufweist, in die eine Erhebung der Leiste (51) eingreift, so dass bezüglich des Verlaufs der Kreisbahn ein Formschluss zwischen der Leiste (51) und dem Drehbügel (25) gebildet ist.

12. Rahmenschloss nach einem der vorstehenden Ansprüche,
wobei die Sperrstruktur zumindest zwei Anschlagabschnitte (49) umfasst, die der Geschlossenstellung und der Offenstellung des Drehbügels (25) entsprechen,
wobei der Riegel (21), wenn sich der Drehbügel (25) in seiner Geschlossenstellung oder seiner Offenstellung befindet und sich der Riegel (21) in seiner Verriegelungsstellung befindet, den entsprechenden Anschlagabschnitt (49) hintergreift und den Drehbügel (25) dadurch gegen ein Verstellen aus der jeweiligen Stellung sperrt,
und wobei sich die Leiste (51) entlang der Kreisbahn zumindest zwischen den zwei Anschlagabschnitten (49) erstreckt.

13. Rahmenschloss nach Anspruch 12,
wobei die Sperrstruktur zumindest zwei von dem Drehbügel (25), vorzugweise in dieselbe Richtung, vorstehende Stege (39) umfasst, wobei jeder der zwei Stege (39) einen der zwei Anschlagabschnitte (49) sowie zwei zueinander entgegengesetzte parallele Seitenflächen (43) aufweist, die sich zumindest im Wesentlichen entlang der Kreisbahn erstrecken,
wobei der Anschlagabschnitt (49) des jeweiligen Stegs (39) durch eine Stirnseite des Stegs (39) gebildet wird, welche die Seitenflächen (43) des Stegs (39) verbindet und zumindest im Wesentlichen senkrecht zur Kreisbahn ausgerichtet ist,
und wobei die Leiste (51) eine Seitenfläche (55) aufweist, welche sowohl mit einer der Seitenflächen (43) des einen der zwei Stege (39) als auch mit einer der Seitenflächen (43) des anderen der zweite Stege (39) zumindest im Wesentlichen fluchtet.

14. Rahmenschloss nach einem der vorstehenden Ansprüche,
wobei die Sperrstruktur zumindest einen in eine Schließrichtung weisenden ersten Anschlagabschnitt (49) und einen in eine zu der Schließrichtung entgegengesetzte Öffnungsrichtung weisenden zweiten Anschlagabschnitt (49) aufweist,
wobei der Riegel (21), wenn sich der Drehbügel (25) in seiner Geschlossenstellung befindet und sich der Riegel (21) in seiner Verriegelungsstellung befindet, den ersten Anschlagabschnitt (49) hintergreift und den Drehbügel (25) dadurch gegen ein Verstellen in die Offenstellung sperrt, wobei der Riegel (21), wenn sich der Drehbügel (25) in seiner Offenstellung befindet und sich der Riegel (21) in einer Teilverriegelungsstellung zwischen der Verriegelungsstellung und der Entriegelungsstellung befindet, den zweiten Anschlagabschnitt (49) hintergreift und den Drehbügel (25) dadurch gegen ein Verstellen in die Geschlossenstellung sperrt,
und wobei die Leiste (51) in einem sich in Öffnungsrichtung an den zweiten Anschlagabschnitt (49) anschließenden Abschnitt ihrer Längserstreckung derart ausgebildet ist, dass sie die Verstellbarkeit des Riegels (21) auf ein Verstellen zwischen der Entriegelungsstellung und der Teilverriegelungsstellung beschränkt.

15. Rahmenschlosssystem mit einem Rahmenschloss (11) nach Anspruch 14 sowie einer weiteren Leiste, die wahlweise anstelle der genannten Leiste (51) an dem Drehbügel (25) anordenbar ist, wobei die weitere Leiste in einem Abschnitt ihrer Längserstreckung, der dem genannten in Öffnungsrichtung an den zweiten Anschlagabschnitt (49) anschließenden Abschnitt entspricht, derart ausgebildet ist, dass sie die Verstellbarkeit des Riegels (21) von der Entriegelungsstellung bis in die Verriegelungsstellung zulässt.

## Claims

1. A frame lock (11) for a two-wheeler, said frame lock (11) comprising a lock body (13), which comprises a latch (21), and a rotary hoop arrangement (47) which comprises a rotary hoop (25), preferably composed of metal, wherein the rotary hoop (25) extends along a circular path and is adjustable relative to the lock body (13) along the circular path between an open position, in which said rotary hoop (25) releases a wheel of the two-wheeler for a rotation, and a closed position in which said rotary hoop (25) blocks the wheel against rotation,
wherein the rotary hoop (25) has a blocking structure comprising an abutment section (49),
wherein the latch (21) is adjustable between an unlocked position and a locked position,
wherein, when the rotary hoop (25) is in its closed position and the latch (21) is in its locked position, the latch (21) engages behind the abutment section (49) and thereby blocks the rotary hoop (25) against an adjustment into the open position, **characterized in that** the rotary hoop arrangement (47) comprises a strip (51), preferably composed of plastic,
and wherein the strip (51) is arranged at the rotary hoop (25), extends along the circular path and is configured such that it covers the rotary hoop (25) along at least a part of its longitudinal extent and at least a part of its periphery,
and wherein the strip (51) extends over more than 180°, preferably over at least 210°, in particular over approximately 225°, in a peripheral direction around the rotary hoop (25).

2. A frame lock according to claim 1,
wherein the strip (51) covers the rotary hoop (25) at least regionally in a direction perpendicular to a plane of the circular path, at least regionally in a direction opposite thereto, and at least regionally in a direction facing a center (M) of the circular path or facing away therefrom.

3. A frame lock according to claim 1 or 2,
wherein the strip (51) contacts the rotary hoop (25) along a longitudinal extent of said strip (51).

4. A frame lock according to any one of the preceding claims,
wherein the strip (51) is formed as a dimensionally stable and/or elastic part separate from the rotary hoop (25).

5. A frame lock according to any one of the preceding claims,
wherein the strip (51) is fastened in a form-fitting manner, in particular in a latching manner, to the rotary hoop (25).

6. A frame lock according to any one of the preceding claims,
wherein an end section (61) of the rotary hoop (25) and a corresponding end section (63) of the strip (51) form a pivot connection (65) which has a pin (53) that extends along a longitudinal axis perpendicular to the plane of the circular path,
wherein the strip (51) is pivotable about the longitudinal axis of the pin (53) relative to the rotary hoop (25).

7. A frame lock according to claims 5 and 6,
wherein the form fit between the strip (51) and the rotary hoop (25) can be brought about by pivoting the strip (51) about the longitudinal axis of the pin (53) towards the rotary hoop (25).

8. A frame lock according to claim 6 or 7,
wherein a hole (37) is formed in the end section (61) of the rotary hoop (25) and the pin (53) is formed at the corresponding end section (63) of the strip (51) and engages into the hole (37).

9. A frame lock according to any one of the claims 6 to 8,
wherein the frame lock (11) further comprises a spring (57), in particular a helical spring, for preloading the rotary hoop (25) relative to the lock body (13),
and wherein the spring (57) is fastened to the pin (53), in particular with an eyelet (67) formed at one end of the spring (57).

10. A frame lock according to any one of the preceding claims,
wherein the strip (51) has a handle (31) for manually adjusting the rotary hoop (25) or a fastening lug (71) for fastening such a handle (31) to the strip (51),
and wherein the handle (31) or the fastening lug (71) either projects radially outwardly with respect to the center (M) of the circular path from the strip (51) or projects perpendicular to the plane of the circular path from the strip (51).

11. A frame lock according to any one of the preceding claims,
wherein the rotary hoop (25) has at least one elevated portion along its longitudinal extent, said elevated portion engaging into a recess of the strip (51) such that a form fit is formed between the strip (51) and the rotary hoop (25) with respect to the course of the circular path;
and/or
wherein the rotary hoop (25) has at least one recess along its longitudinal extent, into which recess an elevated portion of the strip (51) engages such that a form fit is formed between the strip (51) and the rotary hoop (25) with respect to the course of the circular path.

12. A frame lock according to any one of the preceding claims,
wherein the blocking structure comprises at least two abutment sections (49) which correspond to the closed position and the open position of the rotary hoop (25),
wherein, when the rotary hoop (25) is in its closed position or its open position and the latch (21) is in its locked position, the latch (21) engages behind the corresponding abutment section (49) and thereby blocks the rotary hoop (25) against an adjustment from the respective position, and wherein the strip (51) extends along the circular path at least between the two abutment sections (49).

13. A frame lock according to claim 12,
wherein the blocking structure comprises at least two webs (39) projecting from the rotary hoop (25), preferably in the same direction,
wherein each of the two webs (39) has one of the two abutment sections (49) and two mutually opposite parallel side surfaces (43) which extend at least substantially along the circular path,
wherein the abutment section (49) of the respective web (39) is formed by an end face of the web (39) which connects the side surfaces (43) of the web (39) and which is oriented at least substantially perpendicular to the circular path,
and wherein the strip (51) has a side surface (55) which is at least substantially aligned both with one of the side surfaces (43) of the one of the two webs (39) and with one of the side surfaces (43) of the other of the two webs (39).

14. A frame lock according to any one of the preceding claims,
wherein the blocking structure has at least a first abutment section (49) facing in a closing direction and a second abutment section (49) facing in an opening direction opposite the closing direction,
wherein, when the rotary hoop (25) is in its closed position and the latch (21) is in its locked position, the latch (21) engages behind the first abutment section (49) and thereby blocks the rotary hoop (25) against an adjustment into the open position,
wherein, when the rotary hoop (25) is in its open position and the latch (21) is in a partly locked position between the locked position and the unlocked position, the latch (21) engages behind the second abutment section (49) and thereby blocks the rotary hoop (25) against an adjustment into the closed position,
and wherein the strip (51) is formed in a section of its longitudinal extent adjoining the second abutment section (49) in the opening direction such that said strip (51) restricts the adjustability of the latch (21) to an adjustment between the unlocked position and the partly locked position.

15. A frame lock system comprising a frame lock (11) according to claim 14 and a further strip which can be selectively arranged at the rotary hoop (25) instead of said strip (51), wherein the further strip is formed in a section of its longitudinal extent that corresponds to said section adjoining the second abutment section (49) in the opening direction such that said further strip permits the adjustability of the latch (21) from the unlocked position up to and into the locked position.

## Revendications

1. Antivol de cadre (11) pour un deux-roues, comportant un corps d'antivol (13) muni d'un verrou (21), ainsi qu'un ensemble d'étrier rotatif (47) muni d'un étrier rotatif (25), de préférence en métal,
dans lequel
l'étrier rotatif (25) s'étend le long d'une trajectoire circulaire et est déplaçable par rapport au corps d'antivol (13) le long de la trajectoire circulaire entre une position ouverte, dans laquelle il libère une roue du deux-roues pour une rotation, et une position fermée, dans laquelle il bloque la roue à l'encontre d'une rotation,
l'étrier rotatif (25) présente une structure de blocage ayant une portion de butée (49),
le verrou (21) est déplaçable entre une position déverrouillée et une position verrouillée,
lorsque l'étrier rotatif (25) se trouve dans sa position fermée et que le verrou (21) se trouve dans sa position verrouillée, le verrou (21) engage par l'arrière la portion de butée (49) et bloque ainsi l'étrier rotatif (25) à l'encontre d'un déplacement vers la position ouverte,
**caractérisé en ce que**
l'ensemble d'étrier rotatif (47) comprend une baguette (51), de préférence en matière plastique, et
la baguette (51) est disposée sur l'étrier rotatif (25), s'étend le long de la trajectoire circulaire et est conçue de manière à recouvrir l'étrier rotatif (25) le long d'au moins une partie de son extension longitudinale et d'au moins une partie de son pourtour, et
la baguette (51) s'étend sur plus de 180°, de préférence sur au moins 210°, en particulier sur environ 225°, dans la direction périphérique autour de l'étrier rotatif (25).

2. Antivol de cadre selon la revendication 1,
dans lequel la baguette (51) recouvre l'étrier rotatif (25) au moins localement dans une direction perpendiculaire au plan de la trajectoire circulaire, au moins localement dans une direction opposée à celle-ci ainsi qu'au moins localement dans une direction tournée vers le centre (M) de la trajectoire circulaire ou détournée de celui-ci.

3. Antivol de cadre selon la revendication 1 ou 2,
dans lequel, le long de son extension longitudinale, la baguette (51) est en appui contre l'étrier rotatif (25).

4. Antivol de cadre selon l'une des revendications précédentes,
dans lequel la baguette (51) est conçue comme une pièce séparée de l'étrier rotatif (25), de forme stable et/ou élastique.

5. Antivol de cadre selon l'une des revendications précédentes,
dans lequel la baguette (51) est fixée à l'étrier rotatif (25) par complémentarité de forme, en particulier par enclenchement.

6. Antivol de cadre selon l'une des revendications précédentes,
dans lequel une portion d'extrémité (61) de l'étrier rotatif (25) et une portion d'extrémité correspondante (63) de la baguette (51) forment une liaison pivotante (65) présentant un goujon (53) qui s'étend le long d'un axe longitudinal perpendiculaire au plan de la trajectoire circulaire,
la baguette (51) est apte à pivoter par rapport à l'étrier rotatif (25) autour de l'axe longitudinal du goujon (53).

7. Antivol de cadre selon les revendications 5 et 6,
dans lequel la liaison par complémentarité de forme entre la baguette (51) et l'étrier rotatif (25) peut être obtenue par pivotement de la baguette (51) autour de l'axe longitudinal du goujon (53) en direction de l'étrier rotatif (25).

8. Antivol de cadre selon la revendication 6 ou 7,
dans lequel un trou (37) est ménagé dans la portion d'extrémité (61) de l'étrier rotatif (25), et le goujon (53) est formé sur la portion d'extrémité correspondante (63) de la baguette (51) et s'engage dans le trou (37).

9. Antivol de cadre selon l'une des revendications 6 à 8,
dans lequel l'antivol de cadre (11) comprend en outre un ressort (57), en particulier un ressort hélicoïdal, pour précontraindre l'étrier rotatif (25) par rapport au corps d'antivol (13),
et le ressort (57) est fixé au goujon (53), en particulier avec un oeillet (67) formé à une extrémité du ressort (57).

10. Antivol de cadre selon l'une des revendications précédentes,
dans lequel la baguette (51) comporte une manette (31) pour déplacer manuellement l'étrier rotatif (25), ou un appendice de fixation (71) pour fixer une telle manette (31) à la baguette (51),
et la manette (31) ou l'appendice de fixation (71) fait saillie de la baguette (51) soit radialement vers l'extérieur par rapport au centre (M) de la trajectoire circulaire, soit perpendiculairement au plan de la trajectoire circulaire.

11. Antivol de cadre selon l'une des revendications précédentes,
dans lequel l'étrier rotatif (25) présente, le long de son extension longitudinale, au moins un bossage qui s'engage dans un évidement de la baguette (51), de sorte qu'une liaison par complémentarité de forme est établie entre la baguette (51) et l'étrier rotatif (25) par rapport au tracé de la trajectoire circulaire ;
et/ou
l'étrier rotatif (25) présente, le long de son extension longitudinale, au moins un évidement dans lequel s'engage un bossage de la baguette (51), de sorte qu'une liaison par complémentarité de forme est établie entre la baguette (51) et l'étrier rotatif (25) par rapport au tracé de la trajectoire circulaire.

12. Antivol de cadre selon l'une des revendications précédentes,
dans lequel la structure de blocage comprend au moins deux portions de butée (49) qui correspondent à la position fermée et à la position ouverte de l'étrier rotatif (25),
lorsque l'étrier rotatif (25) se trouve dans sa position fermée ou dans sa position ouverte et que le verrou (21) se trouve dans sa position verrouillée, le verrou (21) engage par l'arrière la portion de butée (49) correspondante et bloque ainsi l'étrier rotatif (25) à l'encontre d'un déplacement hors de la position respective,
et la baguette (51) s'étend le long de la trajectoire circulaire au moins entre les deux portions de butée (49).

13. Antivol de cadre selon la revendication 12,
dans lequel la structure de blocage comprend au moins deux nervures (39) faisant saillie de l'étrier rotatif (25), de préférence dans la même direction, chacune des deux nervures (39) présente l'une des deux portions de butée (49) ainsi que deux faces latérales (43) parallèles opposées l'une à l'autre, qui s'étendent au moins sensiblement le long de la trajectoire circulaire, la portion de butée (49) de la nervure respective (39) est formée par une face frontale de la nervure (39), qui relie les faces latérales (43) de la nervure (39) et qui est orientée au moins sensiblement perpendiculairement à la trajectoire circulaire,
et la baguette (51) présente une face latérale (55) qui est au moins sensiblement en alignement avec l'une des faces latérales (43) de l'une des deux nervures (39) tout comme avec l'une des faces latérales (43) de l'autre des deux nervures (39).

14. Antivol de cadre selon l'une des revendications précédentes,
dans lequel la structure de blocage comprend au moins une première portion de butée (49), orientée dans une direction de fermeture, et une deuxième portion de butée (49), orientée dans une direction d'ouverture opposée à la direction de fermeture,
lorsque l'étrier rotatif (25) se trouve dans sa position fermée et que le verrou (21) se trouve dans sa position verrouillée, le verrou (21) engage par l'arrière la première portion de butée (49) et bloque ainsi l'étrier rotatif (25) à l'encontre d'un déplacement vers la position ouverte,
lorsque l'étrier rotatif (25) se trouve dans sa position ouverte et que le verrou (21) se trouve dans une position de verrouillage partiel entre la position verrouillée et la position déverrouillée, le verrou (21) engage par l'arrière la deuxième portion de butée (49) et bloque ainsi l'étrier rotatif (25) à l'encontre d'un déplacement vers la position fermée,
et, dans une portion de son extension longitudinale se raccordant à la deuxième portion de butée (49) dans la direction d'ouverture, la baguette (51) est conçue de manière à limiter la possibilité de déplacement du verrou (21) à un déplacement entre la position déverrouillée et la position de verrouillage partiel.

15. Système d'antivol de cadre comprenant un antivol de cadre (11) selon la revendication 14 ainsi qu'une autre baguette susceptible d'être disposée au choix à la place de ladite baguette (51) sur l'étrier rotatif (25),
dans lequel, dans une portion de son extension longitudinale qui correspond à ladite portion se raccordant à la deuxième portion de butée (49) dans la direction d'ouverture, l'autre baguette est conçue de manière à permettre le déplacement du verrou (21) de la position déverrouillée jusque dans la position verrouillée.
